(19) Europäisches Patentamt
European Patent Office
Office européen des brevets

(11) **EP 2 855 566 B1**

(12) **FASCICULE DE BREVET EUROPEEN**

(45) Date de publication et mention
de la délivrance du brevet:
**04.10.2017 Bulletin 2017/40**

(21) Numéro de dépôt: **13731375.5**

(22) Date de dépôt: **30.05.2013**

(51) Int Cl.:
**B29K 311/00** *(2006.01)*     **C08J 5/24** *(2006.01)*
**B29K 77/00** *(2006.01)*     **B29K 105/08** *(2006.01)*
**B29B 15/12** *(2006.01)*

(86) Numéro de dépôt international:
**PCT/FR2013/051220**

(87) Numéro de publication internationale:
**WO 2013/178955 (05.12.2013 Gazette 2013/49)**

(54) **MATÉRIAU COMPOSITE THERMOPLASTIQUE À BASE DE FIBRES NATURELLES.**

AUF NATURFASERN BASIERTER THERMOPLASTISCHE VERBUNDWERKSTOFF

THERMOPLASTIC COMPOSITE MATERIAL BASED ON NATURAL FIBERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2012 FR 1255110**

(43) Date de publication de la demande:
**08.04.2015 Bulletin 2015/15**

(73) Titulaire: **Arkema France**
**92700 Colombes (FR)**

(72) Inventeurs:
• **HOCHSTETTER, Gilles**
**94240 L'Hay les Roses (FR)**
• **AUDENAERT, Marc**
**27300 Bernay (FR)**
• **BRIFFAUD, Thierry**
**27300 Bernay (FR)**

(74) Mandataire: **Killis, Andréas**
**ARKEMA France**
**DRD/DPI**
**420, rue d'Estienne d'Orves**
**92705 Colombes Cedex (FR)**

(56) Documents cités:
EP-A1- 0 174 225     EP-A1- 0 581 642
WO-A1-03/014198     FR-A1- 2 579 133
FR-A1- 2 603 891     FR-A1- 2 694 008
US-B2- 7 084 213

EP 2 855 566 B1

**Description**

La présente invention concerne la fabrication d'un matériau composite thermoplastique à base de fibres naturelles, un produit et un procédé, une composition précurseur et un matériau fibreux pré-imprégné utilisés pour cette fabrication et les utilisations associées à ces matériaux comme pièces de structure.

L'utilisation de fibres naturelles dans des composites thermoplastiques présente un intérêt de plus en plus croissant pour la mise en oeuvre de composites avec des matières premières d'origine renouvelable et durable en remplacement de matériaux à base de matières premières d'origine fossile non renouvelable. De plus, en plus de fibres naturelles comme, par exemple, les fibres de lin présentent un intérêt pour remplacer des fibres synthétiques, dans un souci de préservation de l'environnement en général, pour donner lieu à des composites à fort taux de matières premières renouvelables et durables. Les matériaux plus légers, qui en résultent, contribuent ainsi à la réduction de la consommation d'énergie dans le domaine de la construction automobile, aéronautique, naval, ferroviaire où les pièces composites sont utilisées avec un rapport amélioré de performance mécanique par unité de poids.

Par contre, une limitation importante dans l'utilisation plus large des fibres naturelles dans les matériaux composites est leur manque de stabilité thermique à des températures supérieures à 230°C, en particulier supérieures à 250°C. Plus particulièrement dans le cas des composites thermoplastiques, pour que la matrice thermoplastique imprègne bien lesdites fibres, la réduction de la viscosité du polymère thermoplastique à l'état fondu est indispensable pour rendre possible l'imprégnation de l'assemblage de fibres avec ce polymère. Un moyen de réduction de cette viscosité est l'augmentation de la température d'imprégnation pour rendre ce polymère fondu plus fluide, mais des températures élevées et supérieures à 230°C seront souvent nécessaires, ce qui rend une telle utilisation incompatible avec la stabilité thermique des fibres naturelles très thermosensibles qui peuvent de ce fait avoir leur structure et performances affectées à partir de 230°C. De même, chercher à travailler sous pression plus forte pour l'imprégnation à l'état fondu, même à une température plus basse, ne permet pas d'avoir un bon compromis d'imprégnation sans éviter la destruction et la dégradation des performances de ces fibres. D'autres solutions de l'état de l'art pour l'imprégnation des fibres synthétiques dans la fabrication de composites à matrice thermoplastique préconisent l'utilisation de prépolymères réactifs par polycondensation de faible Mw comme décrit dans FR 2 603 891 qui décrit un procédé de fabrication d'un matériau composite constitué d'une matrice polyamide renforcée par des fibres de renfort longues. Ces fibres sont imprégnées d'un prépolymère ou d'un oligomère de polyamide qui comporte des fonctions réactives terminales susceptibles de réagir entre elles par chauffage pour allonger la chaîne polymère. L'oligomère ou le prépolymère a une faible masse moléculaire mais les fonctions réactives réagissent par polycondensation avec, en conséquence, la formation de sous-produits de condensation volatils (eau). La présence de tels sous-produits volatils limite l'intérêt de ce type de réaction chimique si les sous-produits de réaction ne sont pas éliminés, mais même dans ce dernier cas des étapes supplémentaires de procédé sont nécessaires, ce qui le complique et réduit sa productivité et augmente son coût. Si ces produits ne sont pas éliminés, alors il se forme des microbulles dans le matériau qui peuvent affecter les performances finales du matériau composite au point de rendre son utilisation sans intérêt. De même, l'utilisation de polymères non réactifs de faible Mw est préconisée dans FR 2 936 441, mais dans ce cas les performances mécaniques de la matrice sont limitées du fait de l'absence d'allongement de chaîne dans le polymère de la matrice thermoplastique.

Par ailleurs, la demande internationale WO 03/014198 décrit une méthode pour fabriquer des composites à partir d'oligomères de polyamide et de fibres qui peuvent être naturelles. Cependant, aucun allongeur de chaîne n'est présent dans cette demande internationale.

Dans le cas des fibres naturelles, pour une bonne imprégnation de ces fibres par la résine thermoplastique à l'état fondu, la température d'imprégnation doit être bien contrôlée et inférieure à 230°C et de préférence inférieure à 200°C et plus préférentiellement ne dépassant pas 190°C, ceci en fonction de la durée d'exposition à ces températures et avec cette durée contrôlée, afin d'éviter le risque de dégradation thermique de la structure des fibres et de leurs performances. Donc, le défi de l'invention est de trouver une solution d'imprégnation des fibres naturelles qui sont peu stables thermiquement, laquelle solution permet l'imprégnation à une température < 230°C, de préférence < 200°C et plus préférentiellement < 190°C, de façon à ne pas les dégrader thermiquement et à ne pas affecter ainsi la tenue mécanique de ces fibres naturelles et celle du matériau composite qui en résulte. Ceci est obtenu tout en garantissant une matrice finale thermoplastique ayant une masse moléculaire suffisamment élevée, afin de garantir les meilleures performances mécaniques audit matériau composite lors d'une sollicitation mécanique. En effet, le rôle de cette matrice thermoplastique est de transférer la contrainte mécanique supportée par le composite auxdites fibres de renfort naturelles. Cette transmission ou transfert de contrainte est optimale quand l'imprégnation et l'adhérence de cette matrice auxdites fibres sont également optimales. Ceci est possible quand l'imprégnation est réalisée avec ladite matrice ayant une viscosité faible. Il est évident que l'obtention d'une viscosité faible pour une matrice thermoplastique finale de masse élevée n'est pas possible du fait de cette masse et surtout du fait de la limitation de la température maximale d'imprégnation imposée par la faible stabilité thermique desdites fibres naturelles. L'utilisation de plus faibles masses moléculaires dudit polymère thermoplastique ne peut donner satisfaction pour résoudre ce problème, dans la mesure où des masses plus faibles ne permettent pas une tenue mécanique élevée dans la plage d'utilisation, notamment lors d'un choc.

Par conséquent, pour pouvoir remédier à ces inconvénients, il est nécessaire de chercher une méthode de fabrication dudit composite permettant la polymérisation in situ dudit polymère thermoplastique à partir de composants réactifs qui, en mélange réactif, présentent des viscosités significativement réduites au départ par rapport audit polymère thermoplastique à l'état fondu. Parmi les solutions de l'état de l'art pour réduire la viscosité lors de l'imprégnation, il y a l'utilisation des monomères ou des prépolymères par réaction de condensation mais avec présence ou élimination de produits gazeux ou volatils dans les conditions de mise en oeuvre dudit matériau composite et qui peuvent ainsi générer lors de la mise en oeuvre du composite en moule fermé, des microbulles dudit composé sous-produit à l'état gazeux. Cependant, dans cette préparation in situ, il faut éviter une chimie qui utilise des monomères qui sont des potentiels produits volatils ou gazeux lors de la mise en oeuvre ou une chimie qui donne lieu à des sous-produits éliminés comme par exemple, par une réaction de polycondensation acide-amine à partir de prépolymères fonctionnalisés pouvant se condenser et donnant lieu à l'élimination d'une molécule d'eau de condensation par groupe amide formé. En effet, de telles molécules éliminées peuvent créer à l'état gazeux, lors de la mise en oeuvre à plus haute température, des microbulles dans le matériau composite final, lesquelles fragilisent ledit matériau. Les sous-produits de condensation éliminés peuvent affecter également la stabilité dimensionnelle de la pièce composite moulée par un retrait volumique lors de l'élimination, en plus de l'affectation de ses performances mécaniques ou chimiques par cette présence même résiduelle.

D'autre part, s'impose l'absence de tout composé volatil ou gazeux utilisé dans cette méthode de préparation, comme des solvants ou des monomères et l'obligation de passer par une réaction en masse sans solvants ni produits ou sous-produits gazeux, d'un état fluide à un état solide.

La présente invention propose d'utiliser une composition précurseur dudit polymère thermoplastique qui est en fait un mélange de prépolymères réactifs dudit polymère thermoplastique de faible Mn, associé avec au moins un allongeur de chaîne réagissant avec ledit prépolymère par réaction de polyaddition en masse sans aucune élimination de sous-produits volatils ou gazeux. Plus particulièrement, cette composition peut comprendre un additif spécifique absorbant à une longueur d'onde d'un rayonnement, tel que laser, par exemple UV ou IR, permettant ainsi le chauffage homogène et instantané de ladite composition et/ou du préimprégné lors de la mise en oeuvre finale ou au moins une charge conductrice à l'électricité et éventuellement à la chaleur, en particulier des nanotubes ou nanofibrilles de carbone, permettant ainsi un chauffage homogène et instantané de ladite composition pour la fusion et imprégnation desdites fibres naturelles et/ou du préimprégné qui en résulte lors de sa mise en oeuvre finale en matériau composite moulé fini. Un tel procédé particulier permet ainsi de raccourcir la durée d'exposition des fibres naturelles sans gradient de température existant avec d'autres systèmes classiques de chauffage.

Aucun document de l'état de l'art ne décrit ni ne suggère une telle solution pour résoudre ledit problème technique, dans le cas des fibres naturelles.

La présente invention concerne d'abord un procédé de fabrication d'un matériau composite comportant un assemblage fibreux d'une ou plusieurs fibres de renfort naturelles, ledit assemblage étant imprégné d'au moins un polymère thermoplastique amorphe ou semi-cristallin et ledit procédé comprenant : i) une étape d'imprégnation de l'assemblage par une composition précurseur à l'état fondu comprenant : a) au moins un prépolymère P(X)n dudit polymère thermoplastique et b) au moins un allongeur de chaîne Y-A-Y comprenant des fonctions Y réactives avec l'une au moins des fonctions X, ii) une étape de polymérisation par (poly)addition en masse à l'état fondu dudit prépolymère avec ledit allongeur de chaîne, avec ledit polymère thermoplastique de la matrice thermoplastique étant le résultat de ladite polymérisation par polyaddition en masse et avec les étapes d'imprégnation i) et de polymérisation ii) ayant lieu à une température inférieure à 250°C et en particulier inférieure à 230°C.

Le deuxième objet de l'invention concerne une composition précurseur réactive pour la mise en oeuvre du procédé selon l'invention, laquelle comprend a) un prépolymère spécifique et b) un allongeur de chaîne spécifique selon l'invention, avec ledit polymère thermoplastique résultant de la composition précurseur par réaction de polyaddition en masse et ladite composition ayant une température de fusion (si prépolymère semi-cristallin) ou de ramollissement (si prépolymère amorphe) inférieure à 220°C, de préférence inférieure à 210°C, plus préférentiellement inférieure à 200°C et encore plus préférentiellement inférieure à 190°C.

L'invention couvre ensuite un matériau fibreux préimprégné qui résulte de l'imprégnation à l'état fondu d'un assemblage d'une ou plusieurs fibres de renfort naturelles par au moins une composition précurseur selon l'invention.

L'invention concerne également l'utilisation d'une composition précurseur comme définie selon l'invention, pour l'imprégnation d'un assemblage d'une ou plusieurs fibres de renfort naturelles et pour la fabrication d'un matériau fibreux préimprégné.

Finalement, la présente invention couvre un matériau composite obtenu par le procédé de fabrication de l'invention et plus particulièrement en utilisant au moins une composition précurseur de l'invention, pour l'étape de d'imprégnation i) et pour l'étape de polymérisation ii).

Donc, le premier objet de la présente invention est un procédé de fabrication d'un matériau composite qui comporte un assemblage fibreux d'une ou plusieurs fibres de renfort naturelles avec ledit assemblage étant imprégné d'au moins un polymère thermoplastique amorphe ou semi-cristallin, ledit procédé comprenant :

i) une étape d'imprégnation dudit assemblage par une composition précurseur à l'état fondu (après fusion) et comprenant :

a) au moins un prépolymère P(X)n dudit polymère thermoplastique, comprenant une chaîne moléculaire P (signifiant chaîne hydrocarbonée) possédant à ses extrémités n fonctions réactives X, avec n allant de 1 à 3, en particulier n étant 1 ou 2, de préférence 2, ledit prépolymère P(X)n ayant une masse moléculaire moyenne en nombre allant de 500 à 10 000,
b) au moins un allongeur de chaîne Y-A-Y comprenant des fonctions Y réactives avec au moins l'une desdites fonctions X

ii) une étape de polymérisation par (poly)addition en masse à l'état fondu dudit prépolymère avec ledit allongeur de chaîne
et en ce que :

- ledit polymère thermoplastique de la matrice thermoplastique est le résultat de ladite polymérisation par polyaddition en masse et
- lesdites étapes d'imprégnation i) et de polymérisation ii) ont lieu à une température inférieure à 250°C, en particulier inférieure à 245°C, de préférence inférieure à 230°C, de préférence particulière inférieure à 210°C, plus préférentiellement inférieure à 200°C et encore plus préférentiellement ne dépassant pas 190°C.

Il faut noter que ladite température d'imprégnation peut être associée avec un temps d'imprégnation dudit assemblage (fibreux) lequel généralement ne dépasse pas 30 secondes et de préférence reste inférieur à 20 secondes. Ce temps peut varier inversement par rapport à la température d'imprégnation utilisée. Il est plus court pour une température plus élevée et plus long pour une température plus basse.

Selon un mode particulier, le procédé de la présente l'invention comprend une étape supplémentaire iii) de mise en oeuvre et de mise en forme finale dudit matériau composite. Plus particulièrement, ladite composition précurseur a une température de fusion (si prépolymère semi-cristallin) ou de ramollissement (si prépolymère amorphe) inférieure à 220°C et de préférence inférieure à 210°C, plus préférentiellement inférieure à 200°C et encore plus préférentiellement inférieure à 190°C.

La température de fusion Tf et la température de cristallisation Tc sont mesurées par DSC après une 1ère chauffe, selon ISO 11357-3. La vitesse de chauffage et de refroidissement est de 20°C/min.

Plus particulièrement, selon un mode préféré de la présente invention, ladite composition précurseur utilisable selon ledit procédé de l'invention, en plus dudit prépolymère a) et dudit allongeur b), comprend c) au moins une charge conductrice de l'électricité et éventuellement de la chaleur et/ou d) au moins un additif absorbant un rayonnement laser, comme UV ou IR, et que ledit procédé comprend une étape de chauffage par micro-ondes ou par induction dans le cas de présence de c) et/ou par rayonnement laser dans le cas de présence de d), de préférence ladite étape de chauffage concernant ladite composition précurseur et/ou le préimprégné qui résulte de ladite imprégnation i) et/ou ladite mise en forme finale dudit matériau composite lors de ladite étape de mise en oeuvre iii). Cela signifie que ladite étape de chauffage peut concerner la fusion de ladite composition précurseur pour l'imprégnation desdites fibres naturelles et éventuellement la polymérisation et/ou ladite étape de mise en oeuvre iii) à partir d'un préimprégné fibreux chauffé ainsi par micro-ondes ou par induction. Cette étape de chauffage reste encore valable mais par rayonnement dans le cas où ladite composition comprend en plus dudit prépolymère a) et dudit allongeur b) au moins un additif spécifique absorbant à une longueur spécifique dudit rayonnement, signifiant également plage spécifique de longueur d'onde dudit rayonnement. Ces deux moyens de chauffage permettent ainsi un chauffage de manière sélective et homogène pour ladite composition et/ou imprégné fibreux et/ou matériau composite lors de sa mise en oeuvre, avec une imprégnation homogène comme une structure du polymère matrice homogène et performances dudit matériau composite homogènes, sans aucun risque particulier de dégradation thermique desdites fibres naturelles par un gradient thermique (gradient de température) dans la composition ou imprégné ou matériau composite, caractéristique des méthodes de chauffage classiques. La combinaison des deux méthodes, c'est-à-dire avec charge conductrice dans ladite composition et chauffage par micro-ondes et induction ou additif absorbant un rayonnement dans ladite composition avec chauffage par rayonnement, comme décrites ci-haut, est possible avec utilisation sélective d'une méthode à une étape et l'autre à une autre étape dudit procédé.

Ledit prépolymère P(X)n défini ci-haut est un prépolymère dudit polymère thermoplastique final constituant la matrice thermoplastique pour le matériau composite de l'invention et, comme tel, ce prépolymère comprend dans sa chaîne moléculaire P des motifs unitaires répétitifs correspondant audit polymère thermoplastique. Par définition, la masse moléculaire dudit prépolymère est plus faible que celle du polymère thermoplastique final qui sera approximativement un multiple de celle dudit prépolymère, à l'approximation près de la masse moléculaire des unités dudit allongeur, lequel allongeur sert de jonction entre au moins deux unités (chaînes) de prépolymère.

**EP 2 855 566 B1**

Ainsi, ledit polymère thermoplastique final comprend une ou plusieurs unités structurales dudit allongeur de chaîne à l'état réagi par réaction entre les fonctions Y dudit allongeur avec les fonctions X dudit prépolymère. Par exemple, dans le cas où ledit polymère est un polyamide, cela signifie que sa structure principale est un polyamide (unités répétitifs amide) résultant de l'allongement de chaîne du prépolymère polyamide P(X)n par l'intermédiaire d'un ou plusieurs allongeurs de chaîne Y-A-Y.

Par conséquent, la chaîne du polymère thermoplastique final (après polymérisation complète de la composition précurseur) est constituée de l'enchaînement desdits prépolymères P(X)n, joints (enchaînés) entre eux par au moins un allongeur de chaîne Y-A-Y avec un ou plusieurs allongeurs jouant le rôle de « jonctions » entre les chaînes de prépolymères, par réaction entre les fonctions X et Y, comme définis ci-haut selon l'invention.

Selon un mode plus particulier, ledit allongeur a indépendamment, c'est-à-dire indépendamment dudit prépolymère ou également comme ledit prépolymère une structure aliphatique.

n = 2 signifie un prépolymère proche de bifonctionnel en X, X signifiant selon l'invention, des fonctions identiques et non réactives entre elles, en particulier avec une précision qui peut être de $\pm$ 10% sur n. Pour n = 1, le prépolymère est monofonctionnel, en particulier avec une précision sur n qui peut être de $\pm$ 10%. Pour n allant de 1 à 3, cela signifie que n est le nombre moyen de fonctions X par prépolymère, en particulier avec la même précision. Pour n supérieur à 2, la réticulation est exclue et dans ce cas, on fait en sorte que la fonctionnalité moyenne en fonctions réactives du système (X et Y) par réactant (prépolymère et allongeur) soit d'au plus égale à 2, c'est-à-dire inférieure ou égale à 2. Plus particulièrement, pour n > 2 et allant jusqu'à 3, l'allongeur est ajouté en grand excès de manière à empêcher toute gélification (réticulation) même avec une conversion totale des fonctions X.

Plus particulièrement dans ce procédé, ladite étape d'imprégnation est réalisée à une température telle que la viscosité de ladite composition précurseur à l'état fondu ne dépasse pas, lors de l'imprégnation, 100 Pa.s et de préférence ne dépasse pas 50 Pa.s et plus préférentiellement ne dépasse pas 10 Pa.s. Ladite viscosité est mesurée à ladite température sous cisaillement de 100 s$^{-1}$ entre deux plans parallèles de diamètre de 50 mm en utilisant un rhéomètre, par exemple Physica MCR301. La température d'imprégnation est ajustée si nécessaire pour que la viscosité soit dans ladite plage de viscosité, de préférence en y associant un temps d'imprégnation comme décrit ci-haut.

La température de mise en oeuvre de l'étape iii) peut se situer dans la plage de la température de polymérisation, comme indiqué ci-dessus et peut être identique à celle de polymérisation.

Ledit polymère thermoplastique peut être choisi parmi : au moins un polyamide ou au moins un copolymère dudit polyamide, y compris polyamide-polyéther ou au moins un de leurs mélanges et de préférence parmi au moins un polyamide, ledit prépolymère P(X)n ayant une masse moléculaire moyenne en nombre Mn allant de 500 à 10000, de préférence de 1000 à 10000, plus préférentiellement de 1000 à 6000 et encore plus préférentiellement de 1000 à 2500 g.mol$^{-1}$.

Le choix du polymère thermoplastique de la matrice du matériau composite fixe implicitement le choix du prépolymère P(X)n, dont seront issues les unités répétitives dudit polymère thermoplastique final.

Concernant les fonctions réactives X préférées portées par ledit prépolymère, elles sont choisies parmi : hydroxyle (OH), amine ($NH_2$) ou carboxy (COOH) et de préférence parmi amine et carboxy.

Par exemple, dans le cas où ledit prépolymère est un polyamide (y compris copolyamide), il est obtenu par polycondensation entre un diacide et une diamine et s'il y a un excès d'amine, les fonctions terminales X seront amines et s'il y a excès d'acide, les fonctions terminales X seront carboxy. Si le polyamide dérive de l'auto-polycondensation d'un amino acide carboxylique, dans ce cas, une des deux fonctions est modifiée par un excès de diacide si on vise X = carboxy ou par un excès de diamine si on vise des fonctions X = amines.

Pour X = OH, on peut modifier un prépolymère terminé par X = carboxy par modification avec un excès de diol.

Pour n > 2 (jusqu'à 3), la fonctionnalité n du prépolymère est réglée en utilisant, par exemple, une triamine et une diamine comme composant amine pour réagir avec un diacide, avec la proportion triamine/diamine ajustée en fonction de n visé.

La Mn peut être mesurée par dosage ou titration potentiométrique des fonctions terminales X et à partir de la fonctionnalité calculée ($n_{calc}$) à partir du bilan de matière et de fonctionnalité des divers réactants. Plus particulièrement, la Mn pour le prépolymère P(X)n, mais qui reste valable pour le polymère final, est calculée à partir du dosage (par potentiométrie) des fonctions terminales X (concentration en meq/g de X) et de la fonctionnalité théorique n calculée dudit prépolymère ($n_{calc}$) compte tenu du bilan matière et de fonctionnalité des réactants présents, avec Mn et ($n_{calc}$) étant définis de la manière suivante :

$$Mn = n_{calc} * 1000 / [X]$$

avec

$$n_{calc} = 2[X] / ([X]+[M]-[B])$$

et finalement

$$Mn = 2000 / ([X] + [M] - [B])$$

où [X], [M] et [B] sont respectivement les concentrations molaires en fonctions réactives X (mesurées), en fins de chaînes non réactifs M (obtenues par exemple par calcul à partir de la quantité de réactif monofonctionnel, si introduit au chargement) et en points de branchements trifonctionnnels B (obtenus par exemple par calcul à partir de la quantité de réactif trifonctionnel si introduit au chargement), la Mn étant exprimée en g/mol et les concentrations en meq/g.

On pourrait également parler de viscosité inhérente correspondante, mesurée dans le m-crésol allant de 0,2 à 1,0, préférentiellement de 0,2 à 0,8 et mieux de 0,2 à 0,5 dl /g. La mesure de la viscosité intrinsèque ou inhérente est réalisée dans le m-crésol. La méthode est bien connue de l'homme du métier. On suit la norme ISO 937 mais en changeant le solvant qui est le m-crésol à la place de l'acide sulfurique et la température étant de 20°C.

Plus particulièrement, ledit prépolymère a une masse moléculaire Mn d'au moins environ deux fois inférieure à celle du polymère thermoplastique final et dans ce cas, ledit polymère thermoplastique final peut comprendre deux chaînes de prépolymère P(X)n pour (c'est-à-dire avec) un (ou une unité d') allongeur Y-A-Y.

La masse moléculaire moyenne en nombre visée dudit polymère thermoplastique final correspond de préférence à des valeurs de viscosité intrinsèque ou inhérente mesurées dans le m-crésol supérieures à 1 dl/g, de préférence de 1 à 3 dl/g et plus préférentiellement de 1,2 à 2 dl/g. Ces dernières plages de viscosité peuvent être considérées comme équivalentes à des Mn allant de 10000 à 40000, de préférence de 12000 à 30000. Les masses Mn peuvent être mesurées par titration des fonctions terminales et de la fonctionnalité, cette dernière calculée par le bilan de matière et de fonctionnalité des réactants comme expliqué ci-haut.

Pour atteindre les masses moléculaires élevées pour ledit polymère thermoplastique final selon l'invention, il faut ajuster le rapport molaire Y/X en fonction de la masse Mn ou viscosité intrinsèque visée pour le polymère final de la matrice thermoplastique. Ce rapport peut varier entre 0,5 et 1,5 en sachant que plus ce rapport est proche de 1, plus la masse Mn ou la viscosité intrinsèque sera élevée.

Selon un mode plus particulier du procédé selon l'invention, ledit prépolymère P(X)n correspond à :

- n = 1 à 3, en particulier n = 1 ou 2, de préférence 2
- X est une fonction réactive parmi : -OH, -NH$_2$ ou -(C=O)OH, de préférence -(C=O)OH (ou CO$_2$H) ou -NH$_2$
- P est une chaîne hydrocarbonée pouvant être aliphatique, semi-cycloaliphatique, semi-arylaliphatique et/ou semi-aromatique.

Le terme de structure « semi-aromatique» signifie selon la présente invention, que ladite structure contient au moins 10% et jusqu'à 50% en moles de composants aromatiques par rapport au total des composants, avec les composants complémentaires étant aliphatiques seulement ou en présence de composants arylaliphatiques et/ou cycloaliphatiques, lesdits aliphatiques étant en proportion molaire prédominante (supérieure) par rapport aux autres (total des) composants complémentaires et avec lesdits aryl aliphatiques et/ou lesdits cycloaliphatiques restant en proportions molaires inférieures à celle desdits aromatiques, de préférence d'au moins 20% inférieures. Proportions 20% inférieures signifie ici que le rapport molaire desdits arylaliphatiques et/ou cycloaliphatiques par rapport auxdits aromatiques ne dépasse pas 0,8.

De manière analogue, sont définies les structures semi-arylaliphatiques ou semi-cycloaliphatiques :

Une structure « semi-arylaliphatique» signifie, selon la présente invention, qu'elle contient au moins 10% et jusqu'à 50% en moles de composants arylaliphatiques par rapport au total des composants, avec les composants complémentaires étant aliphatiques seulement ou en présence de composants aromatiques et/ou cycloaliphatiques, lesdits aliphatiques étant en proportion molaire prédominante par rapport aux autres composants complémentaires et lesdits aromatiques et/ou lesdits cycloaliphatiques restant en proportions molaires inférieures, de préférence d'au moins 20% inférieures, à celle desdits arylaliphatiques.

Une structure semi-cycloaliphatique signifie qu'elle contient au moins 10% et jusqu'à 50% en moles de composants cycloaliphatiques par rapport au total des composants, avec les composants complémentaires étant aliphatiques seulement ou en présence de composants aromatiques et/ou arylaliphatiques, avec lesdits aliphatiques étant en proportion molaire prédominante par rapport aux autres composants complémentaires et lesdits aromatiques et/ou lesdits arylaliphatiques restant en proportions molaires inférieures, de préférence d'au moins 20% inférieures, à celle desdits cycloaliphatiques.

Une structure aliphatique selon la présente invention signifie qu'elle est composée à 100% en moles de composants aliphatiques et ainsi, par définition, cette structure exclut toute présence de groupements aromatiques, cycloaliphatiques ou arylaliphatiques.

Selon un procédé plus particulier :

- lorsque X est $NH_2$ ou OH :

  ○ soit l'allongeur de chaîne Y-A-Y, correspond à :

    ■ Y choisi parmi les groupements : maléimide, sous condition que si X = amine, celle-ci est secondaire, isocyanate éventuellement bloqué, oxazinone ou oxazolinone, de préférence oxazinone ou oxazilinone et
    ■ A est un espaceur carboné (ou radical carboné) portant les fonctions ou groupements réactifs Y, A étant choisi parmi :

      • une liaison covalente entre deux fonctions (groupements) Y dans le cas où Y = oxazinone, oxazolinone ou
      • une chaîne hydrocarbonée ayant un poids moléculaire de 14 à 200 g.mol$^{-1}$

  ○ soit l'allongeur de chaîne Y-A-Y correspond à Y étant un groupement caprolactame et à A pouvant être un radical carbonyle tel que le carbonyl biscaprolactame ou A pouvant être le téréphtaloyle ou l'isophtaloyle,
  ○ soit ledit allongeur de chaîne (Y-A-Y) correspond à Y étant un groupement d'anhydride cyclique et ledit allongeur est alors choisi parmi : un dianhydride carboxylique aromatique et/ou cycloaliphatique, de préférence aromatique

- et lorsque X est -(C=O)OH (ou -$CO_2H$) :

  ○ l'allongeur de chaîne Y-A-Y correspond à :

    ■ Y choisi parmi les groupements : oxazoline, oxazine, imidazoline ou aziridine, comme le 1, 1'-isophtaloyl-bis (2-methyl aziridine) ou comme l'aziridine équivalente avec le téréphtaloyle remplaçant l'isophtaloyle, et à
    ■ A étant un espaceur (radical) carboné tel que défini ci-dessus.

Ledit allongeur peut correspondre à A représentant une simple liaison (dans le cas d'un allongeur de type Y-Y comme la bis-oxazoline), un alkylène, tel que -$(CH_2)_m$- avec m allant de 1 à 14 et de préférence de 2 à 10, un cycloalkylène (tel qu'un -1,3 ou 1,4 cyclohexylène) ou un arylène (tel qu'un -1,3 ou un -1,4 phénylène).

Plus particulièrement, concernant lesdits allongeurs Y-A-Y, quand Y est choisi parmi oxazinone, oxazolinone, oxazine, oxazoline ou imidazoline, dans ce cas, A peut représenter un alkylène tel que -$(CH_2)_m$- avec m allant de 1 à 14 et de préférence de 2 à 10 ou A peut représenter un cycloalkylène et/ou un arylène substitué (alkyle) ou non substitué, comme les arylènes benzéniques tels que les phénylènes o-, m-, -p ou les arylènes naphtaléniques et de préférence A est un arylène et/ou un cycloalkylène.

Dans le cas où Y représente une fonction isocyanate bloqué, ce blocage peut se faire par des agents bloquants de la fonction isocyanate, comme la epsilon-caprolactame, la méthyl éthyl kétoxime, la diméthyl pyrazole, le di-éthyl malonate.

Comme exemples d'allongeurs de chaîne avec des fonctions réactives Y oxazoline ou oxazine convenables à la mise en oeuvre du procédé selon l'invention, on pourra se référer à ceux décrits sous références A, B, C et D à la page 7 de la demande EP 0 581 642 de la Demanderesse ainsi qu'à leurs procédés de préparation et leur mode de réaction qui y sont exposés. A est la bisoxazoline, B la bisoxazine, C la 1,3 phénylène bisoxazoline et D la 1,4-phénylène bisoxazoline.

Comme exemples d'allongeurs de chaîne à fonction réactive Y imidazoline convenables à la mise en oeuvre du procédé selon l'invention, on pourra se référer à ceux décrits (A à F) à la page 7 à 8 et tableau 1 de la page 10, dans la demande EP 0 739 924 de la Demanderesse ainsi qu'à leurs procédés de préparation et leur mode de réaction qui y sont exposés.

Comme exemples d'allongeurs de chaîne à fonction réactive Y = oxazinone ou oxazolinone qui conviennent à la mise en oeuvre du procédé selon l'invention, on peut se référer à ceux décrits sous références A à D à la page 7 à 8 de la demande EP 0 581 641 de la Demanderesse ainsi qu'à leurs procédés de préparation et modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A pouvant être une simple liaison covalente avec pour allongeurs correspondants respectifs étant : bis (benzoxazinone), bisoxazinone et bisoxazolinone.

A peut être également un alkylène en $C_1$ à $C_{14}$, de préférence en $C_2$ à $C_{10}$ ou un arylène, plus particulièrement un phénylène (1,2 ou 1,3 ou 1,4 substitué par Y) ou un radical naphtalène (disubstitué par Y) ou un phtaloyle (iso- ou téréphtaloyle) ou A peut être un cycloalkylène.

Pour les fonctions Y comme oxazine (cycle à 6), oxazoline (cycle à 5) et imidazoline (cycle à 5), le radical A peut être comme décrit ci-haut avec A pouvant être une simple liaison covalente et avec les allongeurs correspondants respectifs étant : bisoxazine, bisoxazoline et bisimidazoline. A peut être également un alkylène en $C_1$ à $C_{14}$, de préférence en $C_2$ à $C_{10}$ ou un arylène et, plus particulièrement, un phénylène (1,2 ou 1,3 ou 1,4 substitué par Y) ou un radical naphtalène (disubstitué par Y) ou un phtaloyle (iso- ou téréphtaloyle) ou A peut être un cycloalkylène.

Dans le cas où Y = aziridine (hétérocycle azoté à 3 atomes équivalent à l'oxyde d'éthylène en remplaçant l'éther-O- par-NH-), le radical A peut être un phtaloyle (1,1'iso-ou téré- phtaloyle) avec comme exemple d'allongeur la 1, 1' isophtaloyl-bis(2-méthyl aziridine).

Comme exemples d'allongeurs dianhydrides cycliques convenables, on peut citer les suivants : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges. Les dianhydrides aromatiques et en particulier dans cette liste sont préférés.

La présence d'un catalyseur de la réaction entre le prépolymère P(X)n et l'allongeur Y-A-Y à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transesterification comme décrits dans EP 0 425 341, page 9 lignes 1 à 7.

Ledit polymère thermoplastique est de préférence un polyamide aliphatique amorphe et/ou semi-cristallin et/ou un polyamide amorphe semi-cycloaliphatique et/ou amorphe semi-aromatique et/ou amorphe semi-arylaliphatique. « Semi-cristallin » signifie que ledit polymère thermoplastique de l'invention présente un pic de fusion, mesuré en DSC, selon la norme selon ISO 11357-2. Il est amorphe s'il y a absence de tout pic de fusion.

Ledit polyamide peut être donc un polyamide amorphe ou semi-cristallin.

Plus particulièrement, ledit polyamide est un polyamide aliphatique bioressourcé (ou biosourcé) et de préférence correspond aux formules suivantes : 11, 10.10, 10.12, 12.10, 6.10 ou un copolymère binaire basé majoritairement (en moles) sur ces polyamides avec comme unités minoritaires choisies parmi : 6, 11, 12, 6.6, 6.10, 6.12, 6.14, 10.6, 10.10, 10.12, 10.14, 12.10, 12.12, 12.14. Dans ces unités minoritaires, la diamine peut être remplacée totalement ou partiellement par des diamines cycloaliphatiques telles que le bis (3,3'-méthyl 4,4'-amino cyclohexyl) méthane (BMACM), le bis (4,4'-amino cyclohexyl) méthane (PACM) ou l'isophorone diamine (IPDA) ainsi que par des diamines arylaliphatiques telles que m- et p-xylylène diamines. De la même manière, dans ces unités minoritaires, le diacide aliphatique peut être remplacé totalement ou partiellement par des diacides aromatiques tels qu'isophtalique, téréphtalique et/ou naphtalène dicarboxylique ainsi que par des diacides cyclo-aliphatiques tels que les acides 1,3- et/ou 1,4- cyclohexane dicarboxyliques.

Selon une option du procédé de l'invention, ledit polyamide est semi-aromatique amorphe et correspond aux formules suivantes :

- 6.I, 8.I, 9.I, 10.I, 11.I, 12.I, 6.I/9.I, 9.I/10.I, 9.I/11.I, 9.I/12.I, 9/6.I, 10/6.1, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I,10.I/11.I,10.I/12.I,11.I/12.I, 12/6.I/10.I, 12/6.I/11.I, 12/6.I/12.I,12/9.I/10.I, 12/9.I/11.I, 12.9.I/12.I, 12/10.I/11.I, 12/10.I12.I, 12/111.I/12.I, 12/11.I/12.I,

- polyamides terpolymères précédents avec 12/ remplacé par 9/, 10/, 6.10/, 6.12/, 10.10/, 10.12/, 9.10/ et 9.12/,

- tous les polyamides cités ci-haut où l'isophtalique (I) est remplacé partiellement (jusqu'à 40% mol) par téréphtalique (T), le naphtalène 2,6 dicarboxylique et/ou par le 1,3- ou le 1,4- CHDA (acide 1,3- ou 1,4-cyclohexane dicarboxylique), avec tout ou partie des diamines aliphatiques linéaires pouvant être remplacées par des diamines aliphatiques ramifiées de préférence parmi triméthyl hexaméthylènediamine (TMD), méthyl pentaméthylènediamine (MPMD), méthyloctaméthylènediamine (MOMD) ou par des diamines cycloaliphatiques de préférence parmi bis (3,3'-méthyl 4,4'-amino cyclohexyl) méthane (BMACM), bis (amino cyclohexyl) méthane (BACM) et/ou isophorone diamine (IPDA) ou des diamines arylaliphatiques, de préférence m- ou p-xylylène diamines

- tous les polyamides cités ci-haut où l'isophtalique (I) est remplacé partiellement ou totalement par un diacide aliphatique linéaire ou ramifié en $C_6$ à $C_{18}$ et en même temps avec remplacement total ou partiel de la diamine aliphatique par une diamine cycloaliphatique parmi BMACM, BACM et/ou IPDA.

Selon une autre option dudit procédé, ledit polyamide est aliphatique semi-cristallin et correspond aux formules suivantes : 6, 11, 12, 6.10, 6.12, 6.14, 10.10, 10.12, 10.14, 12.10, 12.12, 12.14 et des systèmes binaires associant ces homopolymères avec un ou plusieurs composants de PA aliphatiques en proportion molaire minoritaire tels que : 6, 11, 12, 6.6, 6.10, 6.12, 6.14, 10.6, 10.10, 10.12, 10.14, 12.10, 12.12, 12.14 avec dans ces unités minoritaires, la diamine pouvant être remplacée totalement ou partiellement par des diamines cycloaliphatiques telles que BMACM, bis (4,4' amino cyclohexyl) méthane (PACM) ou IPDA ainsi que par des diamines arylaliphatiques telles que m- et p-xylylène diamines, et de la même manière, dans ces unités minoritaires, le diacide aliphatique pouvant être remplacé totalement ou partiellement par des diacides aromatiques tels qu'isophtalique, téréphtalique et/ou naphtalène dicarboxylique ainsi que par des diacides cyclo-aliphatiques tels que les acides 1,3- et/ou 1,4- cyclohexane dicarboxyliques (1,3- ou 1,4-CHDA).

Selon un cas plus particulier et préféré, ledit prépolymère est à base d'aminoacide carboxylique undécanoïque bioressourcé ou à base de PA 10.10 dérivé d'acide sébacique et de décane-1,10 diamine, ces deux derniers composants étant également bioressourcés.

Le terme « fibres de renfort naturelles » signifie des fibres d'origine végétale ou animale. Concernant lesdites fibres de renfort naturelles, elles sont des fibres longues choisies parmi les fibres de : lin, chanvre, sisal, kenaf, abaca, jute, ramie, bois, bambou, noix de coco, ricin, bagasse de canne à sucre, fibres de vers à soie attacus atlas, fibre d'araignée argiope ou un mélange d'au moins deux de ces fibres, de préférence fibres de lin, jute, bambou et plus préférentiellement les fibres de lin.

Ledit assemblage desdites fibres est en particulier un assemblage de fibres longues et de préférence de fibres de lin.

Les fibres longues selon l'invention présentent un facteur de forme (L/D longueur sur diamètre) > 1000.

Selon un mode de réalisation de l'invention, l'assemblage de fibres représente de 40% à 98% en volume et de préférence de 50% à 65% en volume dudit matériau composite. Ledit assemblage de fibres peut être aléatoire (mat), unidirectionnel (UD) ou multidirectionnel (2D, 3D ou autre).

Outre l'assemblage des fibres précitées, le matériau composite fabriqué selon l'invention peut comprendre des charges à l'état dispersé dans le polymère thermoplastique final imprégnant ledit assemblage de fibres ou assemblage fibreux. Il peut s'agir de toute charge connue de l'homme du métier dans le domaine des composites. Il peut notamment s'agir de charges conductrices de la chaleur et/ou de l'électricité, de préférence de deux (conductrices d'électricité et de chaleur) telles que de la poudre de métal, du noir de carbone pulvérulent, graphite expansé, des nanofibrilles de carbone ou des nanotubes de carbone (NTC), de carbure de silicium, de carbonitrure de bore, de nitrure de bore ou de silicium, en particulier des nanofibrilles de carbone ou des nanotubes de carbone (NTC). Lorsque on incorpore des charges conductrices dans la composition précurseur à l'état fondu, il peut être avantageux de mettre en oeuvre un chauffage par micro-ondes ou par induction en particulier applicable non seulement à ladite composition précurseur, mais également audit préimprégné fibreux qui résulte de ladite imprégnation et également ou audit matériau composite lors de sa mise en oeuvre ou mise en forme finale en particulier lors du moulage. Comme charges conductrices dans ce but, on peut utiliser la poudre de métal, du noir de carbone pulvérulent, graphite expansé, des nanofibrilles de carbone ou des nanotubes de carbone (NTC), de carbure de silicium, de carbonitrure de bore, de nitrure de bore ou de silicium, et en particulier des nanofibrilles de carbone ou des nanotubes de carbone (NTC). On pourra se reporter également à ce sujet à la demande WO 2010/130930 de la Demanderesse.

Lorsque ledit matériau composite comprend des charges, et en particulier des charges conductrices, ces charges peuvent représenter par exemple de 0,1 à 30% en poids, de préférence de 0,3 à 15% et plus préférentiellement de 0,3 à 5% en poids du polymère thermoplastique final ou par rapport à la composition précurseur de départ, dans laquelle composition elles sont présentes de préférence au départ.

En particulier, lesdites fibres longues sont continues sous forme d'assemblages comme les tissus, les non tissés ou les renforts fibreux unidirectionnels, les nappes ou les bandes ou les tresses ou elles sont des fibres coupées comme dans les non tissés (mats de fibres) ou feutres.

Selon une autre option de ce procédé, ladite étape i) d'imprégnation à l'état fondu est réalisée à l'extérieur du moule de mise en oeuvre finale dudit composite et comprend une étape préalable de saupoudrage ou une étape de revêtement en lit fluidisé dudit assemblage de fibres par ladite composition précurseur à l'état de poudre solide, suivie d'une étape de chauffage et de fusion de ladite poudre, en particulier par micro-ondes ou par induction dans le cas d'une composition précurseur telle que définie ci-haut selon le procédé de l'invention comprenant en plus dudit prépolymère et dudit allongeur au moins une charge conductrice de l'électricité et éventuellement de la chaleur et éventuellement, d'une étape de calandrage permettant ainsi l'obtention d'un matériau fibreux préimprégné comme produit intermédiaire avant l'étape de polymérisation ii) et de mise en oeuvre finale iii), en particulier cette dernière étape iii) pouvant également comprendre une étape de chauffage par micro-ondes ou par induction dudit préimprégné et/ou dudit matériau composite lors de cette étape iii) de mise en oeuvre, dans le cas où ladite composition précurseur est telle que définie juste ci-dessus dans la même phrase. Ledit saupoudrage de poudre peut être réalisé à l'aide d'un support (tamis) vibrant afin de permettre la répartition homogène de la poudre sur ledit assemblage. Toujours dans ce contexte, les étapes de polymérisation ii) et de mise en oeuvre iii) peuvent être réalisées en utilisant comme matériau de départ ledit matériau fibreux préimprégné décrit ci-avant. Dans ce cas, de préférence l'étape de mise en oeuvre iii) peut être réalisée par thermocompression ou par lamination d'au moins un matériau fibreux préimprégné résultant de ladite étape d'imprégnation i) éventuellement complétée par une mise en forme finale par thermoformage ou estampage. Un tel préimprégné peut être obtenu avec un assemblage de fibres tel que sous forme des tissus UD (unidirectionnels), des tissus 2D (bidirectionnels) ou des non tissés. Plus particulièrement, ladite étape de mise en oeuvre iii) peut comprendre une étape de disposition en quinconce sur une préforme de moule et de façon à ce qu'ils se superposent au moins en partie jusqu'à obtention de l'épaisseur voulue d'au moins deux matériaux fibreux préimprégnés résultant (issus) de ladite étape d'imprégnation i).

En ce qui concerne l'étape de mise en oeuvre iii) du procédé, dans le cas où l'imprégnation a lieu dans le moule de mise en oeuvre, ladite étape de mise en oeuvre iii) peut être réalisée suivant une première option, en moule fermé avec moulage par transfert de résine (RTM) ou par moulage structuré par injection et réaction (S-RIM) ou par moulage par infusion. Suivant une deuxième option, ladite étape de mise en oeuvre iii) peut être réalisée en moule ouvert et plus particulièrement par pultrusion à travers une filière chauffante, avec éventuelle transformation supplémentaire des produits obtenus, en particulier de rubans UD superposés selon la technique AFP (placement des fibres automatique) ou par thermocompression.

Dans le cas où le polymère final est semi-cristallin, le procédé de l'invention peut comprendre une étape de démoulage dudit matériau composite à une température inférieure à la température de cristallisation Tc dudit polyamide.

Dans le procédé de fabrication de matériau composite selon l'invention, ledit matériau composite est en particulier une pièce mécanique ou de structure ou semi-structurelle, en particulier dans le domaine des pièces intérieures d'avion, de transport automobile ou ferroviaire, de l'éolien, de l'hydraulien, du bâtiment, de panneaux, du sport, du nautisme et des loisirs. La pièce composite peut être une pièce moulée et peut être également utilisée pour pièces de voiture électrique, boîtier électronique, téléphone portable, ordinateur.

Un autre objet de la présente invention concerne une composition précurseur réactive pour le mise en oeuvre du procédé de l'invention qui comprend : a) au moins un prépolymère comme défini et b) au moins un allongeur de chaîne comme défini ci-haut conduisant audit polymère thermoplastique par réaction de polyaddition en masse (de ladite composition précurseur), avec la température de fusion ou de ramollissement de ladite composition étant inférieure à 220°C, de préférence inférieure à 210°C, plus préférentiellement inférieure à 200°C et encore plus préférentiellement inférieure à 190°C, et comprenant en plus au moins un additif spécifique qui absorbe à la longueur d'onde d'un rayonnement, en particulier rayonnement laser, plus particulièrement laser UV ou IR ou au moins une charge conductrice de l'électricité et éventuellement de la chaleur comme décrite ci-dessous, de préférence des nanotubes ou des nanofibrilles de carbone..

« Composition précurseur » signifie pour la présente invention que cette composition est le précurseur de la matrice finale du polymère thermoplastique ou c'est la composition dont est issue par réaction de polyaddition ladite matrice thermoplastique finale dudit matériau composite.

Comme exemples convenables de tels additifs, on peut citer : le noir de carbone (NC) sous forme de poudre de NC ou de préférence sous forme de mélanges maîtres à base de NC et de polyéthylène (PE) ou de NC et de polyamide (PA), le graphite expansé, le $TiO_2$ (oxyde de titane), le ZnO (oxyde de zinc) et dans le cas d'un laser IR, l'oxyde d'étain indium (Indium Tin Oxide commercialisé par Evonik). Comme exemple de mélange maître NC + PE avec environ 40% de NC, on peut citer l'EUTHYLEN® commercialisé par BASF. Comme exemple de mélange maître NC + PA avec environ 15% de NC, on peut citer RENOL® BLACK commercialisé par CLARIANCE.

En outre, ladite composition peut comprendre des charges à l'état dispersé qui se trouvent finalement dans le polymère thermoplastique imprégnant ledit assemblage de fibres ou assemblage fibreux. Il peut s'agir de toute charge connue de l'homme du métier dans le domaine des composites. Il peut notamment s'agir de charges conductrices de la chaleur et/ou de l'électricité, telles que de la poudre de métal, du noir de carbone pulvérulent, des nanofibrilles de carbone, des nanotubes de carbone (NTC), de carbure de silicium, de carbonitrure de bore, de nitrure de bore ou de silicium.

L'invention couvre aussi un matériau fibreux préimprégné qui résulte de l'imprégnation à l'état fondu d'un assemblage d'une ou plusieurs fibres de renfort naturelles, par au moins une composition précurseur comme définie ci-haut. Ce matériau fibreux préimprégné peut être obtenu après une étape d'imprégnation i) telle que définie selon l'invention ci-dessus.

Un autre objet de l'invention concerne l'utilisation d'une composition précurseur telle que définie selon l'invention ci-dessus, pour l'imprégnation d'un assemblage fibreux, d'une ou plusieurs fibres de renfort naturelles et pour la fabrication d'un matériau fibreux préimprégné comme décrit ci-haut. Plus particulièrement, cette l'utilisation concerne la fabrication d'un matériau composite et de préférence ledit matériau composite est une pièce composite moulée, plus préférentiellement comme pièce de structure ou semi-structurale dans le domaine aéronautique, automobile, ferroviaire, naval (ou du nautisme), bâtiment, sport, loisirs, hydraulien et éolien.

L'invention couvre finalement un matériau composite obtenu par un procédé de fabrication comme défini selon l'invention décrite ci-haut et plus particulièrement en utilisant au moins une composition précurseur telle que définie ci-haut pour l'étape de d'imprégnation i) et pour l'étape de polymérisation ii). Plus particulièrement, ce matériau composite peut être une pièce composite moulée. Selon un cas préféré de ce matériau composite, ledit prépolymère est à base d'amino acide carboxylique undécanoïque bioressourcé ou à base de PA 10.10 obtenu à partir d'acide sébacique et de décane-1,10 diamine, tous deux étant bioressourcés et ledit assemblage (de renfort) est à base de fibres de lin et plus préférentiellement ledit matériau comprend plus de 50%, de préférence plus de 85% et plus préférentiellement plus de 98% en poids de matières premières de source (origine) naturelle renouvelables.

Les exemples suivants sont présentés dans la partie expérimentale qui suit pour illustrer la présente invention et ses performances et ne limitent en rien sa couverture.

Partie expérimentale

1) Préparation des prépolymères P(X)n utilisés pour le matériau composite

1.1) Prépolymère 1 : polyamide PA) diacide amorphe 10.1/6.1

Dans un réacteur autoclave d'une capacité de 2 litres, on introduit successivement les matières et quantités suivantes :

- 1,6 hexanediamine (HMDA) 77,03 g
- 1,10 décanediamine 270,19 g
- Acide isophtalique 493,53 g
- Rhodorsil® RG22 0,43 g
- NaH$_2$PO$_2$ 60% dans l'eau 3,43 g
- eau 285,0 g

Le Rhodorsil® RG22, un antimousse, est commercialisé par la Société Bluestar Silicones.

Après fermeture du réacteur, l'atmosphère est purgée de son oxygène par de l'azote. Le réacteur est ensuite mis en chauffe pour atteindre 250°C matière, la pression dans le réacteur atteignant 32 bars. L'eau est progressivement éliminée du réacteur par détente en 1 heure jusqu'à pression atmosphérique en maintenant une température matière d'environ 240°C. Le réacteur arrivé à pression atmosphérique est ensuite mis sous balayage d'azote de 25 l/h pendant 15 minutes. Le contenu du réacteur est ensuite vidangé et refroidi dans l'eau. Après essorage, broyage grossier et séchage, on recueille 757,1 g de prépolymère.

D'après le bilan matière et de fonctionnalité, la fonctionnalité $n_{calc}$ du prépolymère d'après la formule décrite plus haut (page 9) est égale à 2.

1.2) Prépolymère 2 : polyamide diacide semi-cristallin 11/6.T/10.T

Dans un réacteur autoclave d'une capacité de 2 litres, on introduit successivement :

- acide amino11 undécanoïque 75,60 g
- 1,6 hexanediamine (HMDA) 65,56 g
- 1,10 décanediamine 244,24 g
- Acide téréphtalique 370,93 g
- Rhodorsil® RG22 0,33 g
- NaH$_2$PO$_2$ 60% dans l'eau 2,84 g
- eau 133 g

Après fermeture du réacteur, l'atmosphère est purgée de son oxygène par de l'azote. Le réacteur est ensuite mis en chauffe pour atteindre 235°C matière, la pression dans le réacteur atteignant 25 bars. Après 1 heure de maintien dans ces conditions, l'eau est progressivement éliminée du réacteur par détente en maintenant 25 bars et en augmentant la température matière jusqu'à 265°C. La pression est ensuite abaissée jusqu'à pression atmosphérique en 2 heures 30 par détente en augmentant progressivement la température matière jusqu'à 285°C. Le réacteur arrivé à pression atmosphérique est ensuite mis sous balayage d'azote de 25 l/h pendant 10 minutes. Le contenu du réacteur est ensuite vidangé, refroidi sur une bande métallique, broyé grossièrement et séché, on recueille 642,2 g de prépolymère.

1.3) Prépolymère 3 : polyamide PA) diacide amorphe 10.I/6.I de Mn 2101

Dans un réacteur autoclave d'une capacité de 2 litres, on introduit successivement les matières et quantités suivantes :

- 1,6 hexanediamine (HMDA) 72,27 g
- 1,10 décanediamine 251,71 g
- Acide isophtalique 396,33 g
- Rhodorsil® RG22 0,33 g
- $NaH_2PO_2$ 60% dans l'eau 2,67 g
- eau 333,0 g

Après fermeture du réacteur, l'atmosphère est purgée de son oxygène par de l'azote. Le réacteur est ensuite mis en chauffe pour atteindre 230°C matière, la pression dans le réacteur atteignant 28 bars. L'eau est progressivement éliminée du réacteur par détente en 1 heure 30 jusqu'à pression atmosphérique en maintenant une température matière d'environ 230°C. Le réacteur arrivé à pression atmosphérique est ensuite mis sous balayage d'azote de 25 l/h pendant 15 minutes. Le contenu du réacteur est ensuite vidangé et refroidi dans l'eau. Après essorage, broyage grossier et séchage, on recueille 635 g de prépolymère 3.

D'après le bilan matière et de fonctionnalité, la fonctionnalité $n_{calc}$ du prépolymère d'après la formule décrite plus haut (page 9) est de 2.

Tableau 1 : Caractéristiques des prépolymères P(X)n préparés

| N° prépo | Structure Prépo | X | Tg (°C) | Tf (°C) | Tc (°C) | $NH_2$ (meq /g) | COOH (meq /g) | n calc | Mn calc | Viscosité à l'état fondu à 100 s$^{-1}$ (Pa.s) | T° viscosité à l'état fondu (°C) |
|---|---|---|---|---|---|---|---|---|---|---|---|
| 1 | 10I/6I | carboxy | 88 | - | - | 0 | 1,931 | 2 | 1035 | 3,1 | 200 |
| 2 | 11/6T/10T | carboxy | 94 | 261 | 227 | 0 | 0,78 | 2 | 2564 | 1 | 300 |
| 3 | 10I/6I | carboxy | 95 | - | - | 0 | 0,952 | 2 | 2101 | 3 20 | 250 200 |

2) Préparation du matériau composite

2.1) équipement utilisé et conditions générales pour la mise en oeuvre du matériau composite

Un procédé RTM (Réaction transfert moulage) est utilisé pour la préparation dudit composite.

L'équipement pour ledit procédé RTM comprend 2 chambres séparées chauffantes permettant de fondre séparément le prépolymère et l'allongeur de chaine.

Deux pistons (un par chambre), fonctionnant sous 1 à 10 bars, permettent d'envoyer les 2 composants fondus dans un mélangeur statique puis d'injecter le mélange réactif dans un moule en acier contenant un renfort fibreux.

Le temps de séjour dans le mélangeur est court (inférieur à 10 s) et permet d'éviter tout allongement de chaîne significatif. Ainsi, la viscosité du mélange peut être considérée comme identique à celle du prépolymère seul à la température d'injection.

L'objet des présents essais est d'illustrer la faisabilité d'un composite à base de fibre de lin par RTM, avec un prépolymère PA amorphe de haute Tg (prépolymère 1) et un allongeur de chaîne comme décrit ci-haut selon l'invention. L'utilisation d'un prépolymère semi-cristallin de haute Tg (prépolymère 2), impose de travailler à haute température (280°C) à cause de son haut point de fusion (265°C) et cela conduit à une dégradation des fibres de lin (voir ci-dessous).

**EP 2 855 566 B1**

L'utilisation d'un PA aliphatique polymère, de bas point de fusion (PA11) correspondant à un polymère final de Mn élevée (et non prépolymère de faible masse) ne donne pas non plus des bons résultats à cause de la mauvaise imprégnation par le fait de l'état trop visqueux (viscosité élevée) dudit polymère.

Le renfort fibreux de lin utilisé est un tissu équilibré (0°, 90°) de fibres de lin Nattex fourni par Dehondt (à 800 g/m$^2$). Quatre couches empilées de ce renfort fibreux ont été déposées dans le moule avant injection pour fabriquer une plaque de forme cylindrique (disque) de composite. Le taux de fibres dans la plaque composite est de 60% en vol.

Le rapport molaire entre fonctions réactives X du prépolymère P(X)n et Y de l'allongeur de chaine Y-A-Y est de : 1/1 (stoechiométrie).

Le moule de forme cylindrique est en acier d'un diamètre de 70 mm et d'une hauteur de 4 mm.

Les performances mécaniques en flexion 3 points sont mesurées selon la méthode ISO 14125.

2.2) <u>Exemples de préparation du composite</u>

2.2.1) <u>Exemple 1 (contre exemple) : Utilisation du polymère PA11 (non prépolymère)</u>

On injecte à la température de 200°C un PA11 poudre T Nat 2P (Arkema), de viscosité 500 Pa.s., le moule étant préchauffé à 200°C avant le remplissage. Seule l'une des 2 chambres de l'équipement est utilisée (car absence d'allongeur de chaîne).

<u>Résultat</u> : Pas d'imprégnation correcte des fibres, avec la résine (polymère) recouvrant des paquets de fibres et des zones significatives de fibres sèches demeurent après l'injection. Le résultat d'imprégnation est jugé mauvais et non satisfaisant.

| FLEXION 3 points | | | DSC | |
|---|---|---|---|---|
| E (GPa) | σ rupture (MPa) | ε rupture (%) | Tg Polymère (°C) | Tg plaque composite (°C) |
| 5 | 15 | 0,3 | 50 | 50 |

2.2.2) <u>Exemple 2 (invention) : utilisation du prépolymère 1 de type 10I/6I)</u>

Dans l'une des chambres, on fond le prépolymère 1 (de type 10I/6I), de masse moléculaire 1035 g/mol, présentant une Tg de 88°C avant l'allongement de chaîne. Ce prépolymère est fonctionnalisé diacide. Dans l'autre chambre, on fond du PBO (bisoxazoline) Allinco 1-3 commercialisé par la société DSM, qui est un allongeur de chaîne portant 2 fonctions oxazolines.

Le mélange réactif est ensuite injecté à 200°C dans un moule préchauffé à 200°C en moins de 30 s. La viscosité à l'état fondu du mélange est identique à celle du prépolymère 1, soit 3,1 Pa.s.

<u>Résultats</u> : L'imprégnation est excellente. Les propriétés mécaniques et la température de transition vitreuse (Tg) sont données dans le tableau 2 ci-dessous.

Tableau 2 : Propriétés mécaniques et mesure et Tg du composite avec prépolymère 1 de type 10I/6I

| FLEXION 3 points | | | DSC | |
|---|---|---|---|---|
| E (GPa) | σ rupture (MPa) | ε rupture (%) | Tg Prépolymère (°C) | Tg plaque composite (°C) |
| 16 | 250 | 2,1 | 98 | 112 |

2.2.3) <u>Exemple 3 (contre exemple) : utilisation du prépolymère 2 semi-cristallin de type 11/10T/6T)</u>

Dans l'une des chambres, on fond le prépolymère 2 semi-cristallin, de type 11/10T/6T, de masse moléculaire 2564 g/mol, ayant une Tg de 94°C avant l'allongement de chaîne. Ce prépolymère 2 est fonctionnalisé diacide. Dans l'autre chambre, on fond du PBO (bisoxazoline) Allinco 1-3 commercialisé par la société DSM, qui est un allongeur de chaîne portant 2 fonctions oxazolines.

Le mélange réactif est ensuite injecté à 280°C dans le moule préchauffé à 280°C en moins de 10 s. La viscosité en fondu du mélange est identique à celle du prépolymère 2, soit 1 Pa.s.

<u>Résultats</u> : L'imprégnation est bonne mais le composite présente une couleur brun foncé, attestant d'une forte dégradation des fibres de lin. De ce fait, les propriétés mécaniques ne sont pas mesurables.

2.2.4) Exemple 4 (contre exemple) : utilisation du prépolymère 3 avec même allongeur que dans exemples précédents

Les mêmes conditions sont utilisées, sauf que la température d'injection et du moule est de 250°C avec une durée d'injection inférieure à 30 s. La viscosité du mélange est identique à celle du prépolymère 3, restant à 1 Pa.s à 250°C à la sortie du mélangeur.

On note qu'à 250°C, le composite devient très rapidement brun foncé, significatif d'une dégradation importante des fibres de lin.

Résultats : voir tableau 3 ci-dessous.

Tableau 3 : Performances mécaniques en flexion 3 points et Tg avec composite à base du prépolymère 3

| FLEXION 3 points | | | DSC | |
|---|---|---|---|---|
| E (GPa) | σ rupture (MPa) | ε rupture (%) | Tg Prépolymère (°C) | Tg plaque composite (°C) |
| 14 | 119 | 0,85 | 95 | 110 |

Méthodes de mesure utilisées

La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s$^{-1}$, entre deux plans parallèles de diamètre de 50 mm.

La Mn et $n_{calc}$ du prépolymère et Mn du polymère thermoplastique sont déterminées comme décrit page 9 de la description.

La température de transition vitreuse est mesurée à l'aide d'un calorimètre différentiel à balayage (DSC), après un 2$^{ème}$ passage en chauffe, suivant la norme ISO 11357-2. La vitesse de chauffage et de refroidissement est de 20°C/min.

Les températures de fusion Tf et de cristallisation Tc sont mesurées par DSC, après une 1$^{ère}$ chauffe, selon ISO 11357-3. La vitesse de chauffage et de refroidissement est de 20°C/min.

Les propriétés mécaniques en Flexion 3 points sont mesurées selon norme ISO 14125.

## Revendications

**1.** Procédé de fabrication d'un matériau composite, **caractérisé en ce qu'**il comporte un assemblage fibreux d'une ou plusieurs fibres de renfort naturelles, imprégné d'au moins un polymère thermoplastique amorphe ou semi-cristallin et que ledit procédé comprend :

i) une étape d'imprégnation dudit assemblage par une composition précurseur à l'état fondu et comprenant :

a) au moins un prépolymère P(X)n dudit polymère thermoplastique comprenant une chaîne moléculaire P possédant à ses extrémités n fonctions réactives X, avec n allant de 1 à 3, en particulier n étant 1 ou 2, de préférence 2, ledit prépolymère P(X)n ayant une masse moléculaire moyenne en nombre Mn allant de 500 à 10000, de préférence de 1000 à 10000, plus préférentiellement de 1000 à 6000 et encore plus préférentiellement de 1000 à 2500 g.mol$^{-1}$, telle que déterminée par potentiométrie,

b) au moins un allongeur de chaîne Y-A-Y comprenant des fonctions Y réactives avec l'une au moins desdites fonctions X

ii) une étape de polymérisation par (poly)addition en masse à l'état fondu dudit prépolymère avec ledit allongeur de chaîne

et **en ce que** :

- ledit polymère thermoplastique de la matrice thermoplastique est le produit de ladite polymérisation par polyaddition en masse de ladite composition précurseur et

- lesdites étapes d'imprégnation i) et de polymérisation ii) ont lieu à une température inférieure à 250°C, en particulier inférieure à 245°C, de préférence inférieure à 230°C, de préférence particulière inférieure à 210°C, plus préférentiellement inférieure à 200°C et encore plus préférentiellement ne dépassant pas 190°C.

**2.** Procédé selon la revendication 1, **caractérisé en ce qu'**il comprend une étape supplémentaire iii) qui comprend la

**EP 2 855 566 B1**

mise en oeuvre et la mise en forme finale dudit matériau composite.

3. Procédé selon la revendication 1 ou 2, **caractérisé en ce que** ladite composition précurseur a une température de fusion (si prépolymère semi-cristallin) ou de ramollissement (si prépolymère amorphe) inférieure à 220°C et de préférence inférieure à 210°C, plus préférentiellement inférieure à 200°C et encore plus préférentiellement inférieure à 190°C.

4. Procédé selon l'une des revendications 1 à 3, **caractérisé en ce que** ladite composition précurseur en plus dudit prépolymère a) et dudit allongeur b) comprend c) au moins une charge conductrice de l'électricité et éventuellement de la chaleur et/ou d) au moins un additif absorbant un rayonnement laser, comme UV ou IR et que ledit procédé comprend une étape de chauffage par micro-ondes ou par induction dans le cas de présence de c) et/ou par rayonnement laser dans le cas de présence de d), de préférence ladite étape de chauffage concernant ladite composition précurseur et/ou le préimprégné qui résulte de ladite imprégnation i) et/ou ladite mise en forme finale dudit matériau composite lors de ladite étape de mise en oeuvre iii).

5. Procédé selon l'une des revendications 1 à 4, **caractérisé en ce que** ladite étape d'imprégnation est réalisée à une température telle que la viscosité de ladite composition précurseur à l'état fondu ne dépasse pas lors de l'imprégnation 100 Pa.s, de préférence ne dépasse pas 50 Pa.s. et plus préférentiellement ne dépasse pas 10 Pa.s.

6. Procédé selon l'une quelconque des revendications 1 à 5, **caractérisé en ce que** ledit polymère thermoplastique est choisi parmi : au moins un polyamide ou au moins un copolymère dudit polyamide, y compris polyamide-polyéther ou au moins un de leurs mélanges et de préférence parmi au moins un polyamide.

7. Procédé selon l'une quelconque des revendications 1 à 6, **caractérisé en ce que** ledit prépolymère P(X)n correspond à :

- n = de 1 à 3, en particulier n = 1 ou 2, de préférence 2
- X est une fonction réactive parmi : -OH, -NH$_2$ ou -(C=O)OH, de préférence -(C=O)OH (ou CO$_2$H) ou -NH$_2$
- P est une chaîne hydrocarbonée pouvant être aliphatique ou semi-cycloaliphatique ou semi-aromatique ou semi-arylaliphatique.

8. Procédé selon la revendication 7, **caractérisé en ce que** :

- lorsque X est NH$_2$ ou OH :

  ◦ soit l'allongeur de chaîne Y-A-Y correspond à :

  - Y choisi parmi les groupements : maléimide, sous condition que si X = amine, celle-ci est secondaire, isocyanate éventuellement bloqué, oxazinone ou oxazolinone, de préférence oxazinone ou oxazolinone et
  - A est un espaceur carboné (ou radical carboné) portant les fonctions ou groupements réactifs Y, A étant choisi parmi :

    • une liaison covalente entre deux fonctions (groupements) Y dans le cas où Y = oxazinone, oxazolinone ou
    • une chaîne hydrocarbonée ayant un poids moléculaire de 14 à 200 g.mol$^{-1}$

  ◦ soit l'allongeur de chaîne Y-A-Y correspond à Y étant un groupement caprolactame et à A pouvant être un radical carbonyle tel que le carbonyl biscaprolactame ou A pouvant être le téréphtaloyle ou l'isophtaloyle
  ◦ soit ledit allongeur de chaîne Y-A-Y correspond à Y étant un groupement d'anhydride cyclique et ledit allongeur est alors choisi parmi : un dianhydride carboxylique aromatique et/ou cycloaliphatique, de préférence aromatique

- et lorsque X est -(C=O)OH (ou -CO$_2$H) :

  ◦ l'allongeur de chaîne Y-A-Y correspond à :

  - Y choisi parmi les groupements : oxazoline, oxazine, imidazoline ou aziridine, comme le 1, 1'-isophtaloyl-bis (2-méthyl aziridine) ou l'aziridine équivalente avec téréphtaloyle à la place d'isophtaloyle et à

- A étant un espaceur radical carboné tel que défini ci-dessus.

9. Procédé selon l'une des revendications 1 à 8, **caractérisé en ce que** ledit polymère thermoplastique est un polyamide aliphatique amorphe et/ou semi-cristallin et/ou un polyamide amorphe semi-cycloaliphatique et/ou amorphe semi-aromatique et/ou amorphe semi-arylaliphatique.

10. Procédé selon la revendication 9, **caractérisé en ce que** ledit polyamide est un polyamide aliphatique bioressourcé et de préférence parmi :11, 10.10, 10.12, 12.10, 6.10 ou un copolymère binaire basé majoritairement en moles sur ces polyamides, avec comme unités minoritaires choisies parmi : 6, 11, 12, 6.6, 6.10, 6.12, 6.14, 10.6, 10.10, 10.12, 10.14, 12.10, 12.12, 12.14 avec dans ces unités minoritaires, la diamine pouvant être remplacée totalement ou partiellement par des diamines cycloaliphatiques telles que BMACM, PACM ou IPDA ainsi que par des diamines arylaliphatiques telles que m- et p-xylylène diamines ou avec dans ces unités minoritaires, le diacide aliphatique pouvant être remplacé totalement ou partiellement par des diacides aromatiques tels qu'isophtalique, téréphtalique et/ou naphtalène dicarboxylique ainsi que par des diacides cyclo-aliphatiques tels que les acides 1,3- et/ou 1,4-cyclohexane dicarboxyliques.

11. Procédé selon la revendication 9, **caractérisé en ce que** ledit polyamide est semi-aromatique amorphe et correspond aux formules suivantes :

- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- polyamides terpolymères précédents avec 12/ remplacé par 9/, 10/, 6.10/, 6.12/, 10.6/, 10.10/, 10.12/, 9.10/ et 9.12/,
- tous les polyamides cités ci-haut, où l'isophtalique (I) est remplacé partiellement jusqu'à 40% mol par téréphtalique (T), le naphtalène 2,6 dicarboxylique et/ou par le 1,3- ou le 1,4- CHDA (acide 1,3- ou 1,4-cyclohexane dicarboxylique), avec tout ou partie des diamines aliphatiques linéaires pouvant être remplacées par des diamines aliphatiques ramifiées, de préférence parmi triméthyl hexaméthylènediamine (TMD), méthyl pentaméthylènediamine (MPMD), méthyloctaméthylènediamine (MOMD) ou par des diamines cycloaliphatiques, de préférence parmi BMACM, BACM et/ou IPDA ou des diamines arylaliphatiques, de préférence m- ou p-xylylène diamines
- tous les polyamides cités ci-haut où l'isophtalique (I) est remplacé partiellement ou totalement par un diacide aliphatique linéaire ou ramifié en $C_6$ à $C_{18}$ et en même temps avec remplacement total ou partiel de la diamine aliphatique par une diamine cycloaliphatique parmi BMACM, BACM et/ou IPDA.

12. Procédé selon la revendication 9, **caractérisé en ce que** ledit polyamide est aliphatique semi-cristallin et correspond aux formules suivantes :

- 6, 11, 12, 6.10, 6.12, 6.14, 10.10, 10.12, 10.14, 12.10, 12.12, 12.14 et des systèmes binaires associant ces homopolymères avec un ou plusieurs composants de PA (polyamides) aliphatiques en proportion molaire minoritaire tels que : 6, 11, 12, 6.6, 6.10, 6.12, 6.14, 10.6, 10.10, 10.12, 10.14, 12.10, 12.12, 12.14 avec dans ces unités minoritaires, la diamine pouvant être remplacée totalement ou partiellement par des diamines cycloaliphatiques telles que BMACM, PACM ou IPDA ainsi que par des diamines arylaliphatiques telles que met p-xylylène diamines ou dans ces unités minoritaires, le diacide aliphatique pouvant être remplacé totalement ou partiellement par des diacides aromatiques tels qu'isophtalique, téréphtalique et/ou naphtalène dicarboxylique ainsi que par des diacides cyclo-aliphatiques tels que les acides 1,3- et/ou 1,4- cyclohexane dicarboxyliques.

13. Procédé selon l'une des revendications 1 à 12, **caractérisé en ce que** ledit prépolymère est à base d'aminoacide carboxylique undécanoïque bioressourcé ou à base de PA 10.10 dérivé d'acide sébacique et de décane-1,10 diamine, tous ces deux composants étant bioressourcés.

14. Procédé selon l'une quelconque des revendications 1 à 13, **caractérisé en ce que** lesdites fibres de renfort naturelles sont de fibres longues choisies parmi les fibres de : lin, chanvre, sisal, kenaf, abaca, jute, ramie, bois, bambou, noix de coco, ricin, bagasse de canne à sucre, fibre de vers à soie attacus atlas, fibre d'araignée argiope ou un mélange d'au moins deux de ces fibres, de préférence fibres de lin, jute, bambou et plus préférentiellement les fibres de lin.

**15.** Procédé selon l'une des revendications 1 à 14, **caractérisé en ce que** lesdites fibres longues sont continues, sous forme d'assemblages comme les tissus, les non tissés ou les renforts fibreux unidirectionnels, les nappes ou les bandes ou les tresses ou elles sont des fibres coupées comme dans les non tissées (mats de fibres) ou feutres.

**16.** Procédé selon l'une des revendications 1 à 15, **caractérisé en ce que** ladite étape i) d'imprégnation à l'état fondu est réalisée à l'extérieur du moule de mise en oeuvre finale dudit composite et qu'elle comprend une étape préalable de saupoudrage ou une étape de revêtement en lit fluidisé dudit assemblage de fibres par ladite composition précurseur à l'état de poudre solide, suivie par une étape de chauffage et de fusion de ladite poudre, en particulier par micro-ondes ou par induction dans le cas d'une composition précurseur telle que définie dans le procédé selon la revendication 4 et éventuellement, d'une étape de calandrage permettant ainsi l'obtention d'un matériau fibreux préimprégné comme produit intermédiaire avant l'étape de polymérisation ii) et de mise en oeuvre finale iii), en particulier cette dernière étape iii) pouvant également comprendre dans le cas où ladite composition précurseur est telle que définie dans le procédé selon la revendication 4, une étape de chauffage par micro-ondes ou par induction, dudit préimprégné et/ou dudit matériau composite lors de cette étape iii) de mise en oeuvre.

**17.** Procédé selon la revendication 16, **caractérisé en ce que** les étapes de polymérisation ii) et de mise en oeuvre iii) sont réalisées en utilisant ledit matériau fibreux préimprégné comme matériau de départ.

**18.** Procédé selon l'une des revendications 1 à 15, **caractérisé en ce que** ladite étape d'imprégnation i) est réalisée dans le moule de mise en oeuvre dudit composite et que ladite étape de mise en oeuvre iii) est réalisée en moule fermé avec moulage par transfert de résine (RTM), moulage structuré par injection et réaction (S-RIM) ou moulage par infusion.

**19.** Procédé selon l'une des revendications 1 à 15, **caractérisé en ce que** ladite étape d'imprégnation i) est réalisée dans le moule de mise en oeuvre dudit composite et que ladite étape de mise en oeuvre iii) est réalisée en moule ouvert par pultrusion à travers une filière chauffante, avec éventuelle transformation supplémentaire des produits obtenus, en particulier de rubans UD superposés selon la technique AFP (placement des fibres automatique) ou par thermocompression.

**20.** Procédé selon la revendication 16 ou 17, **caractérisé en ce que** l'étape de mise en oeuvre iii) est réalisée par thermocompression ou par lamination d'au moins un matériau fibreux préimprégné résultant de ladite étape d'imprégnation i) éventuellement complétée par une mise en forme finale par thermoformage ou estampage.

**21.** Procédé selon l'une des revendications 1 à 20, **caractérisé en ce que** ledit matériau composite est une pièce mécanique ou de structure ou semi-structurale, dans le domaine des pièces intérieures d'avion, de transport automobile ou ferroviaire, de l'éolien, de l'hydraulien, du bâtiment, de panneaux, du sport, du nautisme et des loisirs.

**22.** Composition précurseur réactive pour la mise en oeuvre du procédé selon l'une quelconque des revendications 1 à 21, **caractérisée en ce qu'**elle comprend : a) au moins un prépolymère tel que défini selon l'une quelconque des revendications 1 à 8 et b) au moins un allongeur de chaîne tel que défini selon l'une quelconque des revendications 1 à 7, conduisant audit polymère thermoplastique par réaction de polyaddition en masse, avec la température de fusion ou de ramollissement de ladite composition étant inférieure à 220°C, de préférence inférieure à 210°C, plus préférentiellement inférieure à 200°C et encore plus préférentiellement inférieure à 190°C, telle que déterminée par DSC, après une 1ère chauffe, selon ISO 11357-3 avec une vitesse de chauffage et de refroidissement de 20°C/min, et **en ce qu'**elle comprend en plus au moins un additif spécifique qui absorbe à la longueur d'onde d'un rayonnement, en particulier laser, plus particulièrement laser UV ou IR ou au moins une charge conductrice de l'électricité et éventuellement de la chaleur, de préférence des nanotubes ou des nanofibrilles de carbone.

**23.** Matériau fibreux préimprégné, **caractérisé en ce qu'**il résulte de l'imprégnation à l'état fondu d'un assemblage d'une ou plusieurs fibres de renfort naturelles, par au moins une composition précurseur telle que définie selon la revendication 22 ou telle que définie dans la revendication 1.

**24.** Utilisation d'une composition précurseur telle que définie selon la revendication 22 ou telle que définie dans la revendication 1, **caractérisée en ce qu'**il s'agit d'une utilisation pour l'imprégnation d'un assemblage fibreux d'une ou plusieurs fibres de renfort naturelles ou pour la fabrication d'un matériau fibreux préimprégné tel que défini selon la revendication 23 ou pour la fabrication d'un matériau composite, de préférence d'une pièce composite moulée plus préférentiellement comme pièce de structure ou semi-structurale dans le domaine aéronautique, automobile, ferroviaire, naval, bâtiment, sport, loisirs, hydraulien et éolien.

25. Matériau composite, **caractérisé en ce qu'**il est obtenu par un procédé de fabrication tel que défini selon l'une des revendications 1 à 21 et plus particulièrement en utilisant au moins une composition précurseur telle que définie selon la revendication 22 ou telle que définie dans la revendication 1 pour l'étape de d'imprégnation i) et pour l'étape de polymérisation ii).

26. Matériau composite tel que défini selon la revendication 25, **caractérisé en ce que** le prépolymère de ladite composition précurseur est à base d'amino acide carboxylique undécanoïque bioressourcé ou à base de PA 10.10 tel qu'obtenu à partir d'acide sébacique et de décane-1,10 diamine, tous deux étant bioressourcés, que ledit assemblage est à base de fibres de lin et plus particulièrement qu'il comprend plus de 50%, de préférence plus de 85% et plus préférentiellement plus de 98% en poids de matières premières de source naturelle renouvelables.

**Patentansprüche**

1. Verfahren zur Herstellung eines Verbundwerkstoffs, **dadurch gekennzeichnet, dass** er eine Faseranordnung aus einer oder mehreren Verstärkungsnaturfasern aufweist, die mit mindestens einem amorphen oder teilkristallinen thermoplastischen Polymer imprägniert ist, und dass das Verfahren Folgendes umfasst:

   i) einen Schritt zur Imprägnierung der Anordnung mit einer Vorläuferzusammensetzung im geschmolzenen Zustand, die Folgendes umfasst:

   a) mindestens ein Präpolymer P(X)n des thermoplastischen Polymers, das eine Molekülkette P umfasst, die an ihren Enden n reaktionsfähige funktionelle Gruppen X besitzt, wobei n von 1 bis 3 reicht, n insbesondere 1 oder 2, vorzugsweise 2 ist, wobei das Präpolymer P(X)n eine mittels Potentiometrie ermittelte zahlengemittelte Molmasse Mn von 500 bis 10.000, vorzugsweise von 1000 bis 10.000, bevorzugter von 1000 bis 6000 und noch bevorzugter von 1000 bis 2500 $g \cdot mol^{-1}$ aufweist,
   b) mindestens einen Kettenverlängerer Y-A-Y, der funktionelle Gruppen Y umfasst, die mit mindestens einer der funktionellen Gruppen X reagieren,

   ii) einen Polymerisationsschritt durch Substanz(poly)addition, im geschmolzenen Zustand, des Präpolymers mit dem Kettenverlängerer,
   und dadurch, dass:

   - das thermoplastische Polymer der thermoplastischen Matrix das Produkt der Polymerisation durch Substanzpolyaddition der Vorläuferzusammensetzung ist und
   - der Imprägnierungsschritt i) und der Polymerisationsschritt ii) bei einer Temperatur von unter 250 °C, insbesondere unter 245 °C, vorzugsweise unter 230 °C, besonders bevorzugt unter 210 °C, bevorzugter unter 200 °C und noch bevorzugter unter 190 °C stattfinden.

2. Verfahren nach Anspruch 1, **dadurch gekennzeichnet, dass** es einen zusätzlichen Schritt iii) umfasst, der die Verarbeitung und endgültige Formgebung des Verbundwerkstoffs umfasst.

3. Verfahren nach Anspruch 1 oder 2, **dadurch gekennzeichnet, dass** die Vorläuferzusammensetzung eine Schmelztemperatur (im Falle eines teilkristallinen Präpolymers) oder Glasübergangstemperatur (im Falle eines amorphen Präpolymers) von unter 220 °C und vorzugsweise unter 210 °C, bevorzugter unter 200 °C und noch bevorzugter unter 190 °C aufweist.

4. Verfahren nach einem der Ansprüche 1 bis 3, **dadurch gekennzeichnet, dass** zusätzlich zu dem Präpolymer a) und dem Verlängerer b) die Vorläuferzusammensetzung c) mindestens einen elektrisch leitfähigen und gegebenenfalls wärmeleitfähigen Füllstoff umfasst und/oder d) mindestens einen Zusatzstoff, der eine Laserstrahlung wie UV- oder IR-Laserstrahlung absorbiert, und dass das Verfahren einen Erwärmungsschritt mit Mikrowellen oder durch Induktion bei Vorhandensein von c) und/oder durch Laserstrahlung bei Vorhandensein von d) umfasst, wobei der Erwärmungsschritt vorzugsweise die Vorläuferzusammensetzung und/oder das Prepreg, das aus der Imprägnierung i) hervorgeht, und/oder die endgültige Formgebung des Verbundwerkstoffs im Verarbeitungsschritt iii) betrifft.

5. Verfahren nach einem der Ansprüche 1 bis 4, **dadurch gekennzeichnet, dass** der Imprägnierungsschritt bei einer derartigen Temperatur durchgeführt wird, dass die Viskosität der Vorläuferzusammensetzung im geschmolzenen Zustand bei der Imprägnierung 100 Pa·s nicht übersteigt, vorzugsweise 50 Pa·s nicht übersteigt und bevorzugter 10 Pa·s nicht übersteigt.

6. Verfahren nach einem der Ansprüche 1 bis 5, **dadurch gekennzeichnet, dass** das thermoplastische Polymer ausgewählt wird aus: mindestens einem Polyamid oder mindestens einem Copolymer des Polyamids, darunter Polyamid-Polyether, oder mindestens einer ihrer Mischungen und vorzugsweise aus mindestens einem Polyamid.

7. Verfahren nach einem der Ansprüche 1 bis 6, **dadurch gekennzeichnet, dass** das Präpolymer $P(X)n$ Folgendem entspricht:

- n = 1 bis 3, insbesondere n = 1 oder 2, vorzugsweise 2,
- X ist eine reaktionsfähige funktionelle Gruppe aus: -OH, $-NH_2$ oder -(C=O)OH, vorzugsweise -(C=O)OH (oder $CO_2H$) oder $-NH_2$,
- P ist eine Kohlenwasserstoffkette, die aliphatisch oder teilweise cycloaliphatisch oder teilaromatisch oder teilweise arylaliphatisch sein kann.

8. Verfahren nach Anspruch 7, **dadurch gekennzeichnet, dass**:

- wenn X $NH_2$ oder OH ist:

• der Kettenverlängerer Y-A-Y entweder Folgendem entspricht:

• Y ausgewählt aus folgenden Gruppen: Maleimid, wenn X = Amin, dann ein sekundäres Amin, gegebenenfalls blockiertes Isocyanat, Oxazinon oder Oxazolinon, vorzugsweise Oxazinon oder Oxazolinon und

• A ist ein kohlenstoffhaltiger Abstandshalter (oder kohlenstoffhaltiger Rest), der die reaktionsfähigen funktionellen Gruppen oder Gruppen Y trägt, wobei A ausgewählt wird aus:

- einer kovalenten Bindung zwischen zwei funktionellen Gruppen (Gruppen) Y, wenn Y = Oxazinon, Oxazolinon oder
- einer Kohlenwasserstoffkette mit einer Molmasse von 14 bis 200 $g·mol^{-1}$,

• oder der Kettenverlängerer Y-A-Y dem entspricht, dass Y eine Caprolactam-Gruppe ist und A ein Carbonylrest wie Carbonylbiscaprolactam sein kann oder A Terephthaloyl oder Isophthaloyl sein kann,

• oder der Kettenverlängerer Y-A-Y dem entspricht, dass Y eine cyclische Anhydridgruppe ist und der Verlängerer dann ausgewählt wird aus: einem aromatischen und/oder cycloaliphatischen, vorzugsweise aromatischen, Carbonsäuredianhydrid,

- und wenn X -(C=O)OH (oder $-CO_2H$) ist:

• der Kettenverlängerer Y-A-Y Folgendem entspricht:

• Y ausgewählt aus folgenden Gruppen: Oxazolin, Oxazin, Imidazolin oder Aziridin wie 1,1'-Isophthaloyl-bis(2-methylaziridin) oder dem entsprechenden Aziridin mit Terephthaloyl anstelle von Isophthaloyl, und

• A ist ein wie zuvor definierter kohlenstoffhaltiger Abstandshalterrest.

9. Verfahren nach einem der Ansprüche 1 bis 8, **dadurch gekennzeichnet, dass** das thermoplastische Polymer ein amorphes und/oder teilkristallines aliphatisches Polyamid und/oder ein amorphes teilweise cycloaliphatisches und/oder amorphes teilaromatisches und/oder amorphes teilweise arylaliphatisches Polyamid ist.

10. Verfahren nach Anspruch 9, **dadurch gekennzeichnet, dass** das Polyamid ein biobasiertes aliphatisches Polyamid ist und vorzugsweise aus: 11, 10.10, 10.12, 12.10, 6.10, oder ein binäres Copolymer, das in Mol hauptsächlich auf diesen Polyamiden basiert, mit Einheiten mit einem geringem Anteil ausgewählt aus: 6, 11, 12, 6.6, 6.10, 6.12, 6.14, 10.6, 10.10, 10.12, 10.14, 12.10, 12.12, 12.14, wobei in diesen Einheiten mit einem geringem Anteil das Diamin vollständig oder teilweise durch cycloaliphatische Diamine wie BMACM, PACM oder IPDA sowie durch arylaliphatische Diamine wie m- und p-Xylylendiamin ersetzt werden kann, oder wobei in diesen Einheiten mit einem geringem Anteil die aliphatische Disäure vollständig oder teilweise durch aromatische Disäuren wie Isophthalsäure, Terephthalsäure und/oder Naphthalin-Dicarbonsäure sowie durch cycloaliphatische Disäuren wie 1,3- und/oder 1,4-Cyclohexan-Dicarbonsäure ersetzt werden kann.

11. Verfahren nach Anspruch 9, **dadurch gekennzeichnet, dass** das Polyamid amorph teilaromatisch ist und folgenden Formeln entspricht:

- 6.I, 8.I, 9.I, 10.I, 11.I, 12.I, 6.I/9.I, 9.I/10.I, 9.I/11.I, 9.I/12.I, 9/6.I, 10/6.I, 11/6.I, 12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11.6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I/12.I, 12/11.I/12.I, 12/11.I/12.I,
- vorangehenden Polyamid-Terpolymeren, bei denen 12/ ersetzt wird durch 9/, 10/, 6.10/, 6.12/, 10.6/, 10.10/, 10.12/, 9.10/ und 9.12/,
- sämtlichen zuvor genannten Polyamiden, bei denen die Isophthalsäure (I) teilweise, bis zu 40 Mol-%, durch Terephthalsäure (T), 2,6-Naphthalindicarbonsäure und/oder durch 1,3- oder 1,4-CHDA (1,3- oder 1,4-Cyclohexandicarbonsäure) ersetzt wird, wobei sämtliche oder ein Teil der linearen aliphatischen Diamine ersetzt werden können durch verzweigte aliphatische Diamine, vorzugsweise aus Trimethylhexamethylendiamin (TMD), Methylpentamethylendiamin (MPMD), Methyloctamethylendiamin (MOMD), oder durch cycloaliphatische Diamine, vorzugsweise aus BMACM, BACM und/oder IPDA, oder arylaliphatische Diamine, vorzugsweise m- oder p-Xylylendiamin,
- sämtlichen zuvor genannten Polyamiden, bei denen die Isophthalsäure (I) teilweise oder vollständig durch eine lineare oder verzweigte aliphatische Disäure mit 6 bis 18 C-Atomen ersetzt wird und bei gleichzeitigem vollständigen oder teilweisen Ersetzen des aliphatischen Diamins durch ein cycloaliphatisches Diamin aus BMACM, BACM und/oder IPDA.

12. Verfahren nach Anspruch 9, **dadurch gekennzeichnet, dass** das Polyamid teilkristallin aliphatisch ist und folgenden Formeln entspricht:

- 6, 11, 12, 6.10, 6.12, 6.14, 10.10, 10.12, 10.14, 12.10, 12.12, 12.14 und binären Systemen, bei denen diese Homopolymere mit einem oder mehreren aliphatischen Bestandteilen von PA (Polyamiden) mit einem geringen Molanteil zusammengebracht werden, beispielsweise: 6, 11, 12, 6.6, 6.10, 6.12, 6.14, 10.6, 10.10, 10.12, 10.14, 12.10, 12.12, 12.14, wobei in diesen Einheiten mit einem geringem Anteil das Diamin vollständig oder teilweise durch cycloaliphatische Diamine wie BMACM, PACM oder IPDA sowie durch arylaliphatische Diamine wie m- und p-Xylylendiamin ersetzt werden kann, oder wobei in diesen Einheiten mit einem geringem Anteil die aliphatische Disäure vollständig oder teilweise durch aromatische Disäuren wie Isophthalsäure, Terephthalsäure und/oder Naphthalin-Dicarbonsäure sowie durch cycloaliphatische Disäuren wie 1,3- und/oder 1,4-Cyclohexan-Dicarbonsäure ersetzt werden kann.

13. Verfahren nach einem der Ansprüche 1 bis 12, **dadurch gekennzeichnet, dass** das Präpolymer auf biobasierter Undecansäure als Aminocarbonsäure basiert oder auf PA 10.10 basiert, das von Sebacinsäure und 1,10-Diaminodecan abgeleitet ist, wobei beide Bestandteile biobasiert sind.

14. Verfahren nach einem der Ansprüche 1 bis 13, **dadurch gekennzeichnet, dass** die Verstärkungsnaturfasern Langfasern sind, die ausgewählt sind aus Fasern von: Leinen, Hanf, Sisal, Kenaf, Abaca, Jute, Ramie, Holz, Bambus, Kokosnuss, Rizinus, Zuckerrohr-Bagasse, Fäden der Atlasspinner-Raupe, Fäden der Zebraspinne oder einem Gemisch aus mindestens zwei dieser Fasern, vorzugsweise Leinen-, Jute-, Bambusfasern und bevorzugter Leinenfasern.

15. Verfahren nach einem der Ansprüche 1 bis 14, **dadurch gekennzeichnet, dass** die Langfasern Endlosfasern sind, in Form von Anordnungen wie Geweben, Vliesstoffen oder unidirektionalen Faserverstärkungen, flächigen Gebilden oder Bändern oder Geflechten, oder sie Schnittfasern sind wie bei Vliesstoffen (Fasermatten) oder Filzen.

**16.** Verfahren nach einem der Ansprüche 1 bis 15, **dadurch gekennzeichnet, dass** der Imprägnierungsschritt i) im geschmolzenen Zustand außerhalb des Werkzeugs für die abschließende Verarbeitung des Verbundmaterials durchgeführt wird und dass er einen vorausgehenden Schritt zum Aufstreuen oder einen Schritt zum Beschichten der Faseranordnung mit der Vorläuferzusammensetzung als festes Pulver im Fließbett umfasst, gefolgt von einem Schritt zum Erwärmen und Schmelzen des Pulvers, insbesondere mit Mikrowellen oder durch Induktion bei einer wie im Verfahren nach Anspruch 4 definierten Vorläuferzusammensetzung, und gegebenenfalls von einem Kalandrierschritt, wodurch also ein vorimprägnierter Faserwerkstoff als Zwischenprodukt vor dem Polymerisationsschritt ii) und dem Endverarbeitungsschritt iii) erhalten werden kann, wobei insbesondere dieser letzte Schritt iii), wenn die Vorläuferzusammensetzung der Festlegung im Verfahren nach Anspruch 4 entspricht, einen Schritt zur Erwärmung des Prepregs und/oder des Verbundwerkstoffs bei diesem Verarbeitungsschritt iii) mit Mikrowellen oder durch Induktion umfassen kann.

**17.** Verfahren nach Anspruch 16, **dadurch gekennzeichnet, dass** der Polymerisationsschritt ii) und der Verarbeitungsschritt iii) unter Verwendung des vorimprägnierten Faserwerkstoffs als Ausgangsmaterial durchgeführt werden.

**18.** Verfahren nach einem der Ansprüche 1 bis 15, **dadurch gekennzeichnet, dass** der Imprägnierungsschritt i) in dem Verarbeitungswerkzeug für dieses Verbundmaterial durchgeführt wird und dass der Verarbeitungsschritt iii) im geschlossenen Werkzeug im Harzinjektionsverfahren (RTM), im Reaktionsspritzgussverfahren mit Verstärkungsbauteil (S-RIM) oder Infusionsverfahren durchgeführt wird.

**19.** Verfahren nach einem der Ansprüche 1 bis 15, **dadurch gekennzeichnet, dass** der Imprägnierungsschritt i) in dem Verarbeitungswerkzeug für dieses Verbundmaterial durchgeführt wird und dass der Verarbeitungsschritt iii) im offenen Werkzeug mittels Pultrusion durch eine beheizte Düse durchgeführt wird, gegebenenfalls mit zusätzlicher Umwandlung der erhaltenen Produkte, insbesondere unidirektionaler Fasergelege, die nach dem AFP-Verfahren (automatische Faserablage) übereinandergelegt werden, oder mittels Thermokompression.

**20.** Verfahren nach Anspruch 16 oder 17, **dadurch gekennzeichnet, dass** der Verarbeitungsschritt iii) durch Thermokompression oder durch Laminieren von mindestens einem vorimprägnierten Faserwerkstoff erfolgt, der aus dem Imprägnierungsschritt i) hervorgeht, gegebenenfalls vervollständigt durch eine endgültige Formgebung durch Thermoformen oder Pressen.

**21.** Verfahren nach einem der Ansprüche 1 bis 20, **dadurch gekennzeichnet, dass** der Verbundwerkstoff ein mechanisches Teil oder ein Strukturteil oder ein semistrukturelles Teil im Bereich von Flugzeugeninnenteilen, im Kraftfahrzeug- oder Eisenbahnbereich, im Windkraft- und Wasserkraftbereich, im Bauwesen, im Bereich von Platten, im Sport-, Wassersport- und Freizeitbereich ist.

**22.** Reaktionsfähige Vorläuferzusammensetzung zum Durchführen des Verfahrens nach einem der Ansprüche 1 bis 21, **dadurch gekennzeichnet, dass** sie Folgendes umfasst: a) mindestens ein Präpolymer nach einem der Ansprüche 1 bis 8 und b) mindestens einen Kettenverlängerer nach einem der Ansprüche 1 bis 7, die durch eine Substanzpolyadditionsreaktion das thermoplastische Polymer erzeugen, wobei die nach ISO 11357-3 mittels DDK nach einer ersten Erwärmung mit einer Erwärmungs- und Abkühlungsgeschwindigkeit von 20 °C/min ermittelte Schmelztemperatur oder Glasübergangstemperatur unter 220 °C, vorzugsweise unter 210 °C, bevorzugter unter 200 °C und noch bevorzugter unter 190 °C liegt, und dadurch, dass sie ferner mindestens einen spezifischen Zusatzstoff umfasst, der bei der Wellenlänge einer Strahlung, insbesondere Laserstrahlung, vor allem UV-Laserstrahlung oder IR-Laserstrahlung, absorbiert, oder mindestens einen elektrisch leitfähigen und gegebenenfalls wärmeleitfähigen Füllstoff, vorzugsweise Kohlenstoffnanoröhren oder Kohlenstoffnanofibrillen.

**23.** Vorimprägnierter Faserwerkstoff, **dadurch gekennzeichnet, dass** er aus der Imprägnierung einer Anordnung aus einer oder mehreren Verstärkungsnaturfasern im geschmolzenen Zustand mit mindestens einer Vorläuferzusammensetzung nach Anspruch 22 oder nach Anspruch 1 hervorgeht.

**24.** Verwendung einer Vorläuferzusammensetzung nach Anspruch 22 oder nach Anspruch 1, **dadurch gekennzeichnet, dass** es sich um eine Verwendung zur Imprägnierung einer Faseranordnung aus einer oder mehreren Verstärkungsnaturfasern oder zur Herstellung eines vorimprägnierten Faserwerkstoffs nach Anspruch 23 oder zur Herstellung eines Verbundwerkstoffs handelt, vorzugsweise eines Verbundformteils, bevorzugter als Strukturteil oder semistrukturelles Teil im Luftfahrt-, Kraftfahrzeug-, Eisenbahn-, Schifffahrtsbereich, im Bauwesen, im Sport-, Freizeit-, Wasserkraft- und Windkraftbereich.

**25.** Verbundwerkstoff, **dadurch gekennzeichnet, dass** er durch ein Herstellungsverfahren nach einem der Ansprüche 1 bis 21 erhalten wird, und insbesondere unter Verwendung von mindestens einer Vorläuferzusammensetzung nach Anspruch 22 oder nach Anspruch 1 für den Imprägnierungsschritt i) und für den Polymerisationsschritt ii).

**26.** Verbundwerkstoff nach Anspruch 25, **dadurch gekennzeichnet, dass** das Präpolymer der Vorläuferzusammensetzung auf der biobasierten Aminocarbonsäure Undecansäure basiert oder auf PA 10.10 basiert, das aus Sebacinsäure und 1,10-Diaminodecan erhalten wird, die beide biobasiert sind, wobei die Anordnung auf Leinenfasern basiert, und insbesondere, dass er mehr als 50, vorzugsweise mehr als 85 und bevorzugter mehr als 98 Gewichts-% aus nachwachsenden Rohstoffen natürlicher Herkunft umfasst.

**Claims**

**1.** Process for producing a composite material, **characterized in that** it comprises a fibrous assembly of one or more natural reinforcing fibers, impregnated with at least one amorphous or semicrystalline thermoplastic polymer and that said process comprises:

> i) a step of impregnation of said assembly with a precursor composition in the molten state and comprising:

>> a) at least one prepolymer P(X)n of said thermoplastic polymer, comprising a molecular chain P having, at its ends, n reactive functions X, with n ranging from 1 to 3, in particular n being 1 or 2, preferably 2, said prepolymer P(X)n having a number-average molecular weight Mn ranging from 500 to 10 000, preferably from 1000 to 10 000, more preferentially from 1000 to 6000 and even more preferentially from 1000 to 2500 g.mol$^{-1}$, as determined by potentiometry,
>> b) at least one chain extender Y-A-Y comprising functions Y which react with at least one of said functions X,

> ii) a step of bulk polymerization by poly(addition), in the molten state, of said prepolymer with said chain extender, and in which:

>> - said thermoplastic polymer of the thermoplastic matrix is the result of said bulk polymerization by polyaddition of said precursor composition and
>> - said impregnation i) and polymerization ii) steps take place at a temperature below 250°C, in particular below 245°C, preferably below 230°C, particularly preferably below 210°C, more preferentially below 200°C and even more preferentially not exceeding 190°C.

**2.** Process according to Claim 1, **characterized in that** it comprises an additional step iii) which comprises the processing and the final forming of said composite material.

**3.** Process according to Claim 1 or 2, **characterized in that** said precursor composition has a melting point (if semicrystalline prepolymer) or a softening temperature (if amorphous prepolymer) below 220°C and preferably below 210°C, more preferentially below 200°C and even more preferentially below 190°C.

**4.** Process according to one of Claims 1 to 3, **characterized in that** said precursor composition, in addition to said prepolymer a) and to said extender b), comprises c) at least one filler which conducts electricity and optionally heat and/or d) at least one additive which absorbs a laser radiation, such as UV or IR laser radiation, and that said process comprises a step of heating by microwaves or by induction in the case of the presence of c) and/or by laser radiation in the case of the presence of d), said heating step preferably concerning said precursor composition and/or the prepreg which results from said impregnation i) and/or said final forming of said composite material during said processing step iii).

**5.** Process according to one of Claims 1 to 4, **characterized in that** said impregnation step is carried out at a temperature such that the viscosity of said precursor composition in the molten state does not exceed, during the impregnation, 100 Pa.s, preferably does not exceed 50 Pa.s and more preferentially does not exceed 10 Pa.s.

**6.** Process according to any one of Claims 1 to 5, **characterized in that** said thermoplastic polymer is chosen from: at least one polyamide or at least one copolymer of said polyamide, including polyamide-polyether or at least one mixture thereof, and preferably from at least one polyamide.

7. Process according to any one of Claims 1 to 6, **characterized in that** said prepolymer P(X)n corresponds to:

- n = 1 to 3, in particular n = 1 or 2, preferably 2,
- X is a reactive function among: -OH, -NH$_2$ or-(C=O)OH, preferably -(C=O)OH (or CO$_2$H) or -NH$_2$,
- P is a hydrocarbon-based chain which may be aliphatic or semi-cycloaliphatic or semi-aromatic or semi-arylaliphatic.

8. Process according to Claim 7, **characterized in that**:

- when X is NH$_2$ or OH:

  ◦ either the chain extender Y-A-Y corresponds to:

  - Y chosen from the groups: maleimide, under the condition that, if X = amine, the latter is secondary, optionally blocked isocyanate, oxazinone or oxazolinone, preferably oxazinone or oxazilinone, and
  - A is a carbon-based spacer (or carbon-based radical) bearing the reactive functions or groups Y, A being chosen from:

    • a covalent bond between two functions (groups) Y in the case where Y = oxazinone or oxazolinone, or
    • a hydrocarbon-based chain having a molecular weight of 14 to 200 g.mol$^{-1}$,

  ◦ or the chain extender Y-A-Y corresponds to Y being a caprolactam group and to A possibly being a carbonyl radical such as carbonylbiscaprolactam or A possibly being terephthaloyl or isophthaloyl,
  ◦ or said chain extender (Y-A-Y) corresponds to Y being a cyclic anhydride group and said extender is then chosen from: an aromatic and/or cycloaliphatic, preferably aromatic, dicarboxylic anhydride,

- and when X is -(C=O)OH (or -CO$_2$H) :

  ◦ the chain extender Y-A-Y corresponds to:

  - Y chosen from the groups: oxazoline, oxazine, imidazoline or aziridine, such as 1,1'-isophthaloyl bis(2-methylaziridine) or such as the equivalent aziridine with terephthaloyl replacing isophthaloyl, and to
  - A being a carbon-based spacer radical as defined above.

9. Process according to one of Claims 1 to 8, **characterized in that** said thermoplastic polymer is an amorphous and/or semicrystalline aliphatic polyamide and/or an amorphous semi-cycloaliphatic and/or amorphous semi-aromatic and/or amorphous semi-arylaliphatic polyamide.

10. Process according to Claim 9, **characterized in that** said polyamide is a biobased aliphatic polyamide and preferably from: 11, 10.10, 10.12, 12.10, 6.10 or a binary copolymer based predominantly, in moles, on these polyamides, with minor units chosen from: 6, 11, 12, 6.6, 6.10, 6.12, 6.14, 10.6, 10.10, 10.12, 10.14, 12.10, 12.12, 12.14 with, in these minor units, it being possible for the diamine to be totally or partially replaced with cycloaliphatic diamines such as BMACM, PACM or IPDA and also with arylaliphatic diamines such as m- and p-xylylene diamines, or with, in these minor units, it being possible for the aliphatic diacid to be totally or partially replaced with aromatic diacids such as isophthalic, terephthalic and/or naphthalene dicarboxylic acid and also with cycloaliphatic diacids such as 1,3- and/or 1,4-cyclohexanedicarboxylic acids.

11. Process according to Claim 9, **characterized in that** said polyamide is an amorphous semiaromatic polyamide and corresponds to the following formulae:

- 6.1, 8.I, 9.1, 10.I, 11.I, 12.1, 6.I/9.I, 9.I/10.I, 9.I/11.I, 9.I/12.I, 9/6.1, 10/6.1, 11/6.I,12:6.I, 10/9.1, 10/10.I, 10/11.I, 10/12.I, 11/9.1, 11/10.I, 11/11.I, 11/12.I, 12/9.1, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,

- preceding terpolymer polyamides with 12/ replaced with 9/, 10/, 6.10/, 6.12/, 10.6/, 10.10/, 10.12/, 9.10/ and 9.12/,
- all the abovementioned polyamides where isophthalic (I) is partially, up to 40 mol%, replaced with terephthalic (T), with naphthalene-2,6-dicarboxylic acid and/or with 1,3- or 1,4-CHDA (1,3- or 1,4-cyclohexanedicarboxylic acid), with it being possible for all or part of the linear aliphatic diamines to be replaced with branched aliphatic diamines, preferably from trimethyl hexamethylenediamine (TMD), methyl pentamethylenediamine (MPMD), methyl octamethylenediamine (MOMD), or with cycloaliphatic diamines, preferably from BMACM, BACM and/or IPDA, or arylaliphatic diamines, preferably m- or p-xylylene diamines,
- all the abovementioned polyamides where isophthalic (I) is partially or totally replaced with a linear or branched $C_6$ to $C_{18}$ aliphatic diacid and at the same time with total or partial replacement of the aliphatic diamine with a cycloaliphatic diamine from BMACM, BACM and/or IPDA.

12. Process according to Claim 9, **characterized in that** said polyamide is a semicrystalline aliphatic polyamide and corresponds to the following formulae:

  - 6, 11, 12, 6.10, 6.12, 6.14, 10.10, 10.12, 10.14, 12.10, 12.12, 12.14 and binary systems combining these homopolymers with one or more aliphatic PA (polyamide) constituents in minor molar proportion, such as: 6, 11, 12, 6.6, 6.10, 6.12, 6.14, 10.6, 10.10, 10.12, 10.14, 12.10, 12.12, 12.14 with, in these minor units, it being possible for the diamine to be totally or partially replaced with cycloaliphatic diamines such as BMACM, PACM or IPDA and also with arylaliphatic diamines such as m- and p-xylylene diamines or, in these minor units, it being possible for the aliphatic diacid to be totally or partially replaced with aromatic diacids such as isophthalic, terephthalic and/or naphthalene dicarboxylic acid and also with cycloaliphatic diacids such as 1,3- and/or 1,4-cyclohexanedicarboxylic acids.

13. Process according to one of Claims 1 to 12, **characterized in that** said prepolymer is based on biobased aminoundecanoic carboxylic acid or based on PA 10.10 derived from sebacic acid and from decane-1,10-diamine, both these two constituents being biobased.

14. Process according to any one of Claims 1 to 13, **characterized in that** said natural reinforcing fibers are long fibers chosen from fibers of: flax, hemp, sisal, kenaf, abaca, jute, ramie, wood, bamboo, coconut, castor oil plant, sugarcane bagasse, *Attacus atlas* silkworm fiber, Argiope spider fiber or a mixture of at least two of these fibers, preferably flax, jute and bamboo fibers and more preferentially flax fibers.

15. Process according to one of Claims 1 to 14, **characterized in that** said long fibers are continuous, in the form of assemblies such as fabrics, nonwovens or unidirectional fibrous reinforcements, sheets or strips or braids or they are fibers which have been cut up, as in nonwovens (fiber mats) or felts.

16. Process according to one of Claims 1 to 15, **characterized in that** said step i) of impregnation in the molten state is carried out outside the mold for final processing of said composite and that it comprises a prior step of dusting or a step of coating, in a fluidized bed, said assembly of fibers with said precursor composition in the solid powder state, followed by a step of heating and melting said powder, in particular by microwaves or by induction in the case of a precursor composition as defined in Process according to Claim 4, and optionally by a calendaring step thus making it possible to obtain a preimpregnated fibrous material as intermediate product before the polymerization ii) and final processing iii) step, it being possible for the latter step iii) to also in particular comprise, in the case where said precursor composition is as defined in Process according to Claim 4, a step of heating said prepreg and/or said composite material, by microwaves or by induction, during this processing step iii).

17. Process according to Claim 16, **characterized in that** the polymerization ii) and processing iii) steps are carried out using said preimpregnated fibrous material as starting material.

18. Process according to one of Claims 1 to 15, **characterized in that** said impregnation step i) is carried out in the mold for processing said composite and that said processing step iii) is carried out in a closed mold with resin transfer molding (RTM), structural reaction injection molding (S-RIM) or infusion molding.

19. Process according to one of Claims 1 to 15, **characterized in that** said impregnation step i) is carried out in the mold for processing said composite and that said processing step iii) is carried out in an open mold by pultrusion through a heating die, with optional additional conversion of the products obtained, in particular of superimposed UD bands, according to the AFP (automatic fiber placement) technique or by thermocompression.

20. Process according to Claim 16 or 17, **characterized in that** the processing step iii) is carried out by thermocompression or by lamination of at least one preimpregnated fibrous material resulting from said impregnation step i) optionally completed by a final forming by thermoforming or stamping.

21. Process according to one of Claims 1 to 20, **characterized in that** said composite material is a mechanical or structural or semi-structural part, in the field of internal aircraft parts, motor vehicle or railway transportation, wind energy, water energy, construction, panels, sport, water sports and leisure.

22. Reactive precursor composition for carrying out Process according to any one of Claims 1 to 21, **characterized in that** it comprises: a) at least one prepolymer as defined in any one of Claims 1 to 8 and b) at least one chain extender as defined in any one of Claims 1 to 7, producing said thermoplastic polymer by bulk polyaddition reaction, with the melting point or softening temperature of said composition being below 220°C, preferably below 210°C, more preferentially below 200°C and even more preferentially below 190°C, as determined by DSC after a first heating, according to ISO 11357-3 with a heating and cooling rate of 20°C/min, and **in that** it also comprises at least one specific additive which absorbs at the wavelength of a radiation, in particular laser radiation, more particularly UV or IR laser radiation, or at least one filler which conducts electricity and optionally heat, preferably carbon nanotubes or nanofibrils.

23. Preimpregnated fibrous material, **characterized in that** it results from the impregnation in the molten state of an assembly of one or more natural reinforcing fibers, with at least one precursor composition as defined in Claim 22 or as defined in Claim 1.

24. Use of a precursor composition as defined in Claim 22 or as defined in Claim 1, **characterized in that** it is a use for impregnating a fibrous assembly of one or more natural reinforcing fibers or for producing a preimpregnated fibrous material as defined in Claim 23 or for producing a composite material, preferably a molded composite part, more preferentially as a structural or semi-structural part in the fields of aeronautics, motor vehicles, railways, shipbuilding, construction, sport, leisure, water power and wind power.

25. Composite material, **characterized in that** it is obtained by means of a production process as defined in one of Claims 1 to 21 and more particularly using at least one precursor composition as defined in Claim 22 or as defined in Claim 1 for the impregnation step i) and for the polymerization step ii).

26. Composite material as defined in Claim 25, **characterized in that** the prepolymer of said precursor composition is based on biobased amino undecanoic carboxylic acid or based on PA 10.10 as obtained from sebacic acid and from decane-1,10-diamine, both being biobased, that said assembly is based on flax fibers and more particularly that it comprises more than 50%, preferably more than 85% and more preferentially more than 98% by weight of renewable raw materials of natural source.

## RÉFÉRENCES CITÉES DANS LA DESCRIPTION

**Documents brevets cités dans la description**

- FR 2603891
- FR 2936441
- WO 03014198 A
- EP 0581642 A
- EP 0739924 A
- EP 0581641 A
- EP 0425341 A
- WO 2010130930 A